# EUROPÄISCHE PATENTSCHRIFT

(11) **EP 2 897 695 B1**
(45) Veröffentlichungstag und Bekanntmachung des Hinweises auf die Patenterteilung: **01.01.2020**
(21) Anmeldenummer: 13760040.9
(22) Anmeldetag: 10.09.2013
(51) Int. Cl.: A62C 35/68, G05D 16/10

(54) **DRUCKREDUZIER-VENTIL FÜR EINE AUTOMATISCHE BRANDLÖSCHANLAGE**
PRESSURE-REDUCING VALVE FOR AN AUTOMATIC FIRE-EXTINGUISHING SYSTEM
SOUPAPE RÉDUCTRICE DE PRESSION POUR UNE INSTALLATION D'EXTINCTION D'INCENDIE AUTOMATIQUE

(30) Priorität: 20.09.2012 DE 102012216837
(43) Veröffentlichungstag der Anmeldung: 29.07.2015
(73) Patentinhaber: FiWaRec Valves & Regulators GmbH & Co. KG, 54343 Föhren (DE)
(72) Erfinder: FELTEN, Frank, 54313 Zemmer (DE); BERMES, Karl, 54666 Irrel (DE)
(74) Vertreter: Rau, Schneck & Hübner Patentanwälte Rechtsanwälte PartGmbB
(86) Internationale Anmeldenummer: PCT/EP2013/068672
(87) Internationale Veröffentlichungsnummer: WO 2014/044572

(56) Entgegenhaltungen:
- EP-A1- 2 166 424
- EP-A1- 2 166 424
- WO-A1-03/093708
- US-A- 2 888 949
- US-A- 5 860 447

## Beschreibung

Die Erfindung betrifft ein Druckreduzier-Ventil für eine automatische Brandlöschanlage.

Automatische Brandlöschanlagen sind beispielsweise zur Verwendung in Gebäuden bekannt. Eine derartige Brandlöschanlage ermöglicht bei einer Auslösung der Anlage ein automatisiertes Abgeben von Löschmedium wie beispielsweise CO₂ oder N₂, das in einem oder mehreren Druckbehältern unter Hochdruck bevorratet ist. Ein hierfür erforderliches Druckreduzier-Ventil ist aus der EP 2 166 424 A1 bekannt.

Weitere Druckreduzier-Ventile sind bekannt aus WO 03/093 708 A1, US 2,888,949, US 5,860,447 und US 3,435,843.

Der Erfindung liegt die Aufgabe zugrunde, ein Druckreduzier-Ventil für eine automatische Brandlöschanlage zu schaffen, das die Abgabe eines Löschmediums von einem Druckbehälter in eine Löschmedium-Abgabevorrichtung verbessert und insbesondere eine konstante Ausbringung des Löschmediums bei reduziertem Druck ermöglicht.

Die Aufgabe wird durch ein Druckreduzier-Ventil mit den Merkmalen gemäß Anspruch 1 gelöst. Der Kern der Erfindung besteht darin, einen in einem Ventilgehäuse längs verlagerbaren Druckregel-Kolben vorzusehen, der einerseits mit einem Kraftspeicher-Element zum Ausüben einer Öffnungskraft zur Verlagerung des Druckregel-Kolbens in eine Offenstellung und andererseits mit Löschmedium beaufschlagt werden kann, so dass das Löschmedium eine der Öffnungskraft entgegenwirkende Schließkraft auf den Druckregel-Kolben ausübt, um den Druckregel-Kolben in die Schließstellung zu bewegen. Das erfindungsgemäße Druckreduzier-Ventil ist für eine automatische Brandlöschanlage geeignet. Das Druckreduzier-Ventil wirkt passiv, d. h. der Druckregel-Kolben wird automatisch und selbsttätig von einer Offenstellung in eine Schließstellung verlagert, sofern ein Mindestdruck in dem Ventilgehäuse erreicht ist. Das Ventilgehäuse weist eine Längsachse auf und umfasst eine Eingangsöffnung zum Verbinden des Druckreduzier-Ventils mit einem Druckbehälter-Ventil eines Druckbehälters, in dem das Löschmedium unter Hochdruck bevorratet ist. Das Druckbehälter-Ventil wirkt mit einer Auslöse-Einheit zusammen. Das Druckbehälter-Ventil ist an dem Druckbehälter angeordnet. Die Auslöse-Einheit kann pneumatisch, manuell und/oder elektrisch angesteuert werden, um das Druckbehälter-Ventil zu betätigen. Durch Betätigung des Druckbehälter-Ventils wird das Druckreduzier-Ventil mit Löschmedium unter Druck beaufschlagt. In einem Zustand vor Betätigung des Druckbehälter-Ventils ist das Druckreduzier-Ventil in einem drucklosen Zustand. Das Ventilgehäuse weist eine Ausgangsöffnung zum Verbinden des Druckreduzier-Ventils mit einer Löschmedium-Abgabevorrichtung, beispielsweise in Form einer Löschleitung, auf. Zwischen der Eingangsöffnung und der Ausgangsöffnung ist ein Strömungskanal angeordnet. Entlang des Strömungskanals ist ein erstes Dichtungselement vorgesehen, das zum abdichtenden Anliegen an dem Druckregel-Kolben in der Schließstellung dient. Das bedeutet, dass in der Schließstellung der Strömungskanal fluiddicht abgedichtet ist. In der Schließstellung ist die Eingangsöffnung von der Ausgangsöffnung fluiddicht getrennt. Dagegen ist in der Offenstellung, also wenn das erste Dichtungselement beabstandet von dem Druckregel-Kolben angeordnet ist und insbesondere nicht abdichtend an dem Druckregel-Kolben anliegt, eine Fluidverbindung zwischen der Eingangsöffnung und der Ausgangsöffnung gegeben. Die Offenstellung liegt insbesondere dann vor, wenn das Druckreduzier-Ventil in einem drucklosen Zustand, insbesondere vor Betätigen des Druckbehälter-Ventils vorliegt. Insbesondere dichtet das erste Dichtungselement den Strömungskanal ab, in dem es umfangsseitig an einer äußeren Zylindermantelfläche des Druckregel-Kolbens anliegt. Es ist auch möglich, dass das erste Dichtungselement und der Druckregel-Kolben derart ausgeführt sind, dass das erste Dichtungselement umfangsseitig an einer inneren Zylindermantelfläche des Druckregel-Kolbens abdichtend anliegt. Zusätzlich oder alternativ kann ein weiteres Dichtungselement vorgesehen sein, das ein Abdichten, insbesondere in einer axialen Richtung, an einer Stirnfläche, die insbesondere ringförmig ausgeführt ist, des Druckregel-Kolbens ermöglicht. Die von dem Kraftspeicher-Element verursachte Öffnungskraft und die von dem Löschmedium verursachte Schließkraft wirken insbesondere entlang der Längsachse des Ventilgehäuses und sind antiparallel, also einander entgegengesetzt orientiert. In der Schließstellung des Druckregel-Kolbens ist der Strömungskanal durch das erste Dichtungselement in eine der Eingangsöffnung zugewandte Hochdruck-Kammer und eine der Ausgangsöffnung zugewandte Niederdruck-Kammer geteilt. Die Hochdruck-Kammer ist von der Niederdruck-Kammer in der Schließstellung des Druckregel-Kolbens fluiddicht getrennt. Wenn an der Ausgangsöffnung das Löschmedium mit einem Druck anliegt, der mindestens so groß ist wie ein Niederdruck, der gegenüber dem Hochdruck reduziert ist, insbesondere höchstens 20% des Hochdrucks beträgt, insbesondere höchstens 10% des Hochdrucks beträgt und insbesondere höchstens 5% des Hochdrucks beträgt, ist die Schließkraft größer als die Öffnungskraft, d. h. der Druckregel-Kolben wird selbsttätig in die Schließstellung verlagert. Dadurch ist gewährleistet, dass das Löschmedium bei reduziertem Niederdruck von dem Druckreduzier-Ventil an die Löschmedium-Abgabevorrichtung bereitgestellt werden kann. Das Druckreduzier-Ventil ermöglicht eine zuverlässige Druckreduktion des Löschmediums. Dadurch ist es möglich, dass die Löschmedium-Abgabevorrichtung, insbesondere Rohrleitungsnetze einer Löschleitung für niedrigere Drücke ausgelegt werden können. Dadurch ist es möglich, Aufwand und Kosten für eine automatische Brandlöschanlage zu reduzieren. Aufgrund des reduzierten Abgabedrucks des Löschmediums ist das Gefahrenpotential reduziert. Das Löschmedium kann mittels des erfindungsgemäßen Druckreduzier-Ventils mit einer konstanten Ausbringrate, also mit einem konstanten Volumenstrom, ausgebracht werden.

Bei dem Druckreduzier-Ventil liegt das erste Dichtungselement umfangsseitig an einer inneren Zylindermantelfläche des in der Schließstellung angeordneten Druckregel-Kolbens an. Das Druckreduzier-Ventil ermöglicht ein fluiddichtes Abdichten des Strömungskanals in einer besonders unkomplizierten Weise. Insbesondere ist es nicht erforderlich, einen Ventilsitz bereitzustellen. Dadurch wird ein Anschlagen einer Ventilkomponente gegen einen Ventilsitz und somit eine klappernde Geräuschentwicklung und/oder eine Beschädigung oder Zerstörung eines Dichtelements verhindert. Insbesondere ist es nicht erforderlich, dass der Druckregel-Kolben stirnseitig abgedichtet wird.

Ein Druckreduzier-Ventil gemäß Anspruch 2 ist unkompliziert aufgebaut und daher kostengünstig herstellbar. Weiterhin sind die Strömungsbedingungen für das Löschmedium innerhalb des Druckreduzier-Ventils verbessert. Insbesondere ist es nicht erforderlich, das Löschmedium entlang einer 90°-Umlenkung im Strömungskanal folgen muss. Insbesondere ist eine geradlinige Strömung möglich.

Ein Druckreduzier-Ventil gemäß Anspruch 3 weist rotationssymmetrische Bauteile auf. Insbesondere sind sämtliche Bauteile des Druckreduzier-Ventils rotationssymmetrisch bezüglich der Längsachse des Ventilgehäuses ausgeführt. Derartige Bauteile können kostengünstig und insbesondere in hohen Stückzahlen kostengünstig hergestellt werden.

Ein Druckreduzier-Ventil gemäß Anspruch 4 ermöglicht dessen variable Handhabung und/oder Verwendung. Beispielsweise ist es möglich, den für das Erreichen der Schließstellung des Druckkolbens erforderlichen Niederdruck einem damit zu verbindenden Rohrleitungsnetz anzupassen. Entsprechend ist es möglich, ein Druckreduzier-Ventil an verschiedene Voraussetzungen, wie beispielsweise einen Maximaldruck des Rohrleitungsnetzes flexibel anzupassen. Weiterhin ist es möglich, verschiedene Sicherheitsanforderungen und/oder Austragsraten für Löschmedium bereitzustellen.

Ein Druckreduzier-Ventil nach Anspruch 5 ermöglicht eine abgedichtete Verlagerung des Druckregel-Kolbens in dem Ventilgehäuse.

Ein Druckreduzier-Ventil gemäß Anspruch 6 ermöglicht eine Einstellung des Niederdrucks, ab dem die Schließkraft auf den Druckregel-Kolben größer ist als die Öffnungskraft, die von dem Kraftspeicher-Element verursacht wird, indem eine effektive Kolbenfläche, die die Differenz einer zweiten Dichtungsfläche und einer ersten Dichtungsfläche ist, verändert wird.

Ein Druckreduzier-Ventil gemäß Anspruch 7 ermöglicht eine kompakte und unkomplizierte Bauweise des Druckreduzier-Ventils. Dadurch, dass der Druckregel-Kolben zumindest abschnittsweise Bestandteil des Strömungskanals ist, sind die Strömungsbedingungen für das Löschmedium in dem Druckreduzier-Ventil verbessert.

Ein Druckreduzier-Ventil nach Anspruch 8 ermöglicht eine effektive und direkte Beaufschlagung des Druckregel-Kolbens mit dem Kraftspeicher-Element. Dadurch, dass das Kraftspeicher-Element ein Feder-Element und insbesondere eine Schraubenfeder ist, die insbesondere als Druckfeder verwendet wird, ist die passive Funktionsweise des Druckreduzier-Ventils zusätzlich vereinfacht.

Ein Druckreduzier-Ventil gemäß Anspruch 9 ermöglicht eine Trennung des Feder-Elements von dem Strom des Löschmediums entlang des Strömungskanals. Möglicherweise störende Interaktionen zwischen der Feder und dem Löschmedium sind ausgeschlossen.

Das Druckreduzier-Ventil, bei dem eine Entlüftungsbohrung der Feder-Kammer vorgesehen ist, ermöglicht einen Druckausgleich der Feder-Kammer.

Ein Druckreduzier-Ventil gemäß Anspruch 10 ermöglicht eine gezielte Strömungsumlenkung des durch die Eingangsöffnung eingeströmten Löschmediums.

Ein Druckreduzier-Ventil gemäß Anspruch 11 weist ein drittes Dichtungselement mit einer dritten Dichtungsfläche auf. Das dritte Dichtungselement ermöglicht eine abgedichtete Führung des Druckregel-Kolbens in dem Ventilgehäuse. Die dritte Dichtungsfläche und die erste Dichtungsfläche sind gleich groß. Das bedeutet, dass auf das erste Dichtungselement keine von dem unter Hochdruck stehenden Löschmediums verursachte Drucckraft wirkt. Das bedeutet, dass die Lebensdauer des ersten Dichtungselements erhöht ist. Insbesondere ist es dadurch möglich, einen konstanten Niederdruck an der Ausgangsöffnung des Druckreduzier-Ventils unabhängig von dem Hochdruck in dem Druckbehälter zu ermöglich. Das erste Dichtungselement ermöglicht einen vollständig kompensierten Sitz des Druckregel-Kolbens.

Ein Druckreduzier-Ventil nach Anspruch 12 ermöglicht ein schnelles und unkompliziertes Öffnen und Schließen des Ventilgehäuses mittels eines lösbar montierbaren Ventilgehäuse-Deckels. Dadurch ist eine Montage des Druckreduzier-Ventils vereinfacht. Die Herstellkosten und insbesondere die Montagekosten sind reduziert. Insbesondere kann der Ventilgehäuse-Deckel einen Anschlussstutzen zur Verbindung mit einer Löschleitung aufweisen. Insbesondere ist der Anschlussstutzen einteilig Teil an dem Ventilgehäuse-Deckel angeformt.

Ein Druckreduzier-Ventil nach Anspruch 13 ermöglicht eine erhöhte Variabilität bei der Einstellung des Niederdrucks in der Niederdruck-Kammer in dem Ventil-Gehäuse. Dadurch, dass eine Steuerdruck-Kammer vorgesehen ist, in der ein Steuermedium mit Steuerdruck bevorratet werden kann, wirkt eine zusätzliche Steuerdruck-Schließkraft auf den Druckregel-Kolben. Die Steuerdruck-Schließkraft ist der von der Niederdruck-Kammer verursachten Schließkraft gleichgerichtet. Die Steuerdruck-Schließkraft wirkt der Öffnungskraft des Kraftspeicher-Elements entgegen.

Ein Druckreduzier-Ventil gemäß Anspruch 14 ermöglicht eine direkte und unkomplizierte Beaufschlagung der Steuerdruck-Kammer mit Steuerdruck-Medium. Insbesondere ermöglicht ein Steuerdruck-Ventil auch ein gezieltes Abführen von Steuerdruck-Medium aus der Steuerdruck-Kammer. Die Handhabung der Steuerdruck-Kammer ist vereinfacht. Das Einstellen der Steuerdruck-Schließkraft ist vereinfacht.

Ein Druckreduzier-Ventil nach Anspruch 15 ermöglicht ein Dämpfen des Anschlagens des Druckregel-Kolbens im Ventilgehäuse.

Zusätzliche Merkmale und Einzelheiten der Erfindung ergeben sich aus der nachfolgenden Beschreibung von drei Ausführungsbeispielen anhand der Zeichnung. Es zeigen:
Handhabung der Steuerdruck-Kammer ist vereinfacht. Das Einstellen der Steuerdruck-Schließkraft ist vereinfacht.

Ein Druckreduzier-Ventil nach Anspruch 15 ermöglicht ein Dämpfen des Anschlagens des Druckregel-Kolbens im Ventilgehäuse.

Zusätzliche Merkmale und Einzelheiten der Erfindung ergeben sich aus der nachfolgenden Beschreibung von drei Ausführungsbeispielen anhand der Zeichnung. Es zeigen:
- Fig. 1: eine perspektivische Ansicht einer automatischen Brand-löschanlage mit mehreren Druckbehältern, an welchen jeweils ein erfindungsgemäßes Druckreduzier-Ventil angeschlossen ist,
- Fig. 2: einen Längsschnitt durch ein Druckreduzier-Ventil gemäß einem nicht erfindungsgemäßen Ausführungsbeispiel mit einem Druckregel-Kolben in einer Schließstellung,
- Fig. 3: eine Fig. 2 entsprechende Darstellung mit dem Druckregel-Kolben in einer abweichenden Schließstellung,
- Fig. 4: eine Fig. 2 entsprechende Darstellung mit dem Druckregel-Kolben in einer Offenstellung,
- Fig. 5: eine Fig. 2 entsprechende Darstellung eines Druckreduzier-Ventils gemäß einem nicht erfindungsgemäßen Ausführungsbeispiel,
- Fig. 6: eine Fig. 5 entsprechende Darstellung mit dem Druckregel-Kolben in einer abweichenden Schließstellung,
- Fig. 7: eine Fig. 5 entsprechende Darstellung mit dem Druckregel-Kolben in einer Offenstellung,
- Fig. 8: eine Fig. 2 entsprechende Darstellung eines Druckreduzier-Ventils gemäß einem nicht erfindungsgemäßen Ausführungsbeispiel,
- Fig. 9: eine Fig. 8 entsprechende Darstellung mit dem Druckregel-Kolben in einer abweichenden Schließstellung und
- Fig. 10: eine Fig. 8 entsprechende Darstellung mit dem Druckregel-Kolben in einer Offenstellung,
- Fig. 11: eine Fig. 2 entsprechende Darstellung eines Druckreduzier-Ventils gemäß einem erfindungsgemäßen Ausführungsbeispiel,
- Fig. 12: eine Fig. 11 entsprechende Darstellung mit dem Druckregel-Kolben in einer abweichenden Schließstellung,
- Fig. 13: eine Fig. 11 entsprechende Darstellung mit dem Druckregel-Kolben in einer Offenstellung,
- Fig. 14: eine vergrößerte Detailansicht des Details XIV in Fig. 13,
- Fig. 15: eine Fig. 2 entsprechende Darstellung eines Beispiels eines Druckreduzier-Ventils gemäß einem nicht erfindungsgemäßen Beispiel,
- Fig. 16: eine Fig. 15 entsprechende Darstellung mit dem Druckregel-Kolben in einer abweichenden Schließstellung,
- Fig. 17: eine Fig. 15 entsprechende Darstellung mit dem Druckregel-Kolben in einer Offenstellung,
- Fig. 18: eine vergrößerte Detailansicht des Details XVIII in Fig. 17,
- Fig. 19: eine Fig. 2 entsprechende Darstellung eines Druckreduzier-Ventils gemäß einem nicht erfindungsgemäßen Ausführungsbeispiel,
- Fig. 20: eine Fig. 19 entsprechende Darstellung mit dem Druckregel-Kolben in einer abweichenden Schließstellung,
- Fig. 21: eine Fig. 19 entsprechende Darstellung mit dem Druckregel-Kolben in einer Offenstellung,
- Fig. 22: eine vergrößerte Detailansicht des Details XXII in Fig. 21,
- Fig. 23: eine Fig. 2 entsprechende Darstellung eines Druckreduzier-Ventils gemäß einem weiteren erfindungsgemäßen Ausführungsbeispiel,
- Fig. 24: eine Fig. 23 entsprechende Darstellung mit dem Druckregel-Kolben in einer abweichenden Schließstellung,
- Fig. 25: eine Fig. 23 entsprechende Darstellung mit dem Druckregel-Kolben in einer Offenstellung,
- Fig. 26: eine vergrößerte Detailansicht des Details XXVI in Fig. 25, und
- Fig. 27: eine Fig. 2 entsprechende vergrößerte Detailansicht mit einem Druckregel-Kolben gemäß einem nicht erfindungsgemäßen Ausführungsbeispiel.

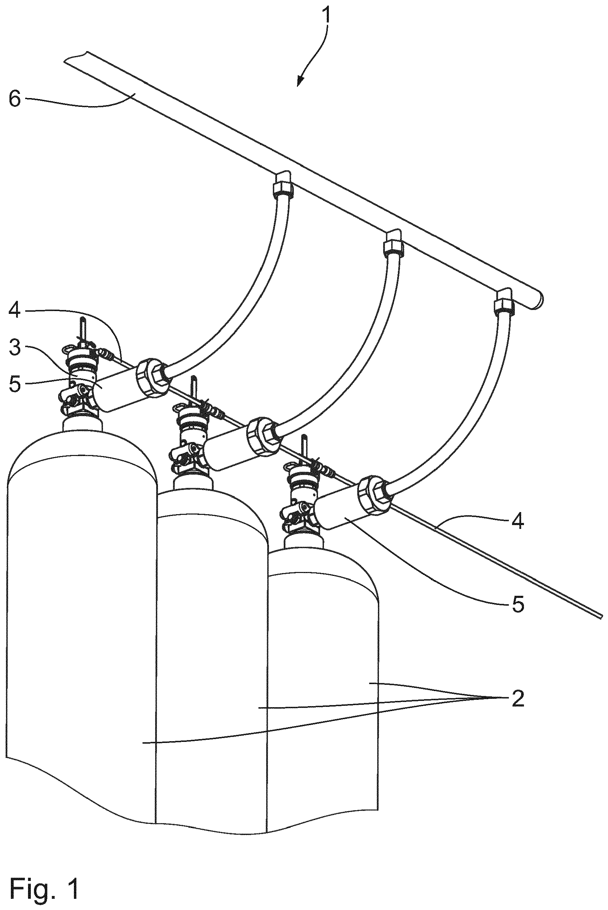

Eine in Fig. 1 als Ganzes mit 1 bezeichnete automatische Brandlöschanlage umfasst drei Druckbehälter 2 in Form von Druckgasflaschen. In den Druckbehältern 2 ist jeweils ein Löschmedium wie beispielsweise CO₂ oder N₂ unter Hochdruck p_{H} bevorratet. An den Druckbehältern 2 ist jeweils ein Abgabe-Ventil 3 angebracht. An dem Abgabe-Ventil 3 ist ein Auslöseschlauch 4 angebracht. Der Auslöseschlauch 4 ermöglicht ein automatisches Auslösen der automatischen Brandlöschanlage 1. Dazu dient der Auslöseschlauch 4 als Steuerleitung. Der Auslöseschlauch 4 kann beispielsweise über eine nicht dargestellte Steuereinheit angesteuert werden, sobald eine Brandursache festgestellt worden ist. Der Auslöseschlauch wird mit Druck beaufschlagt und das Abgabe-Ventil 3 insbesondere pneumatisch angesteuert. Der Auslöseschlauch ist beispielsweise ein Kunststoff-Schlauch. Der Auslöseschlauch 4 kann auch als Rohrleitung ausgeführt sein. Es ist grundsätzlich auch denkbar, dass der Auslöseschlauch 4 ein passives, automatisches Auslösen der automatischen Brandlöschanlage 1 ermöglicht. Beispielsweise bei einem Überschreiten einer kritischen Temperatur öffnet der Auslöseschlauch 4 durch Reißen oder Platzen, so dass in dem Auslöseschlauch 4 angeordnetes Löschmedium austritt. Der Druckabfall in dem Auslöseschlauch 4 bewirkt ein Betätigen des Abgabeventils 3. Es ist zusätzlich oder alternativ möglich, eine manuelle Auslösevorrichtung vorzusehen. Ebenfalls an dem Abgabeventil 3 ist ein Druckreduzier-Ventil 5 angeschlossen. Das Druckreduzier-Ventil 5 ist an eine Löschmedium-Abgabevorrichtung 6 in Form eines Rohrleitungsnetzes für eine Löschleitung angeschlossen. Im Fall einer automatischen Auslösung der automatischen Brandlöschanlage 1 mittels des Auslöseschlauchs 4 kann eine automatische Abgabe von Löschmedium über die Löschmedium-Abgabevorrichtung 6 erfolgen. In dem Druckbehälter 2 kann über das Abgabeventil 3 und das Druckreduzier-Ventil 5 Löschmedium in die Löschmedium-Abgabevorrichtung 6 während eines Löschvorgangs nachgeliefert werden.

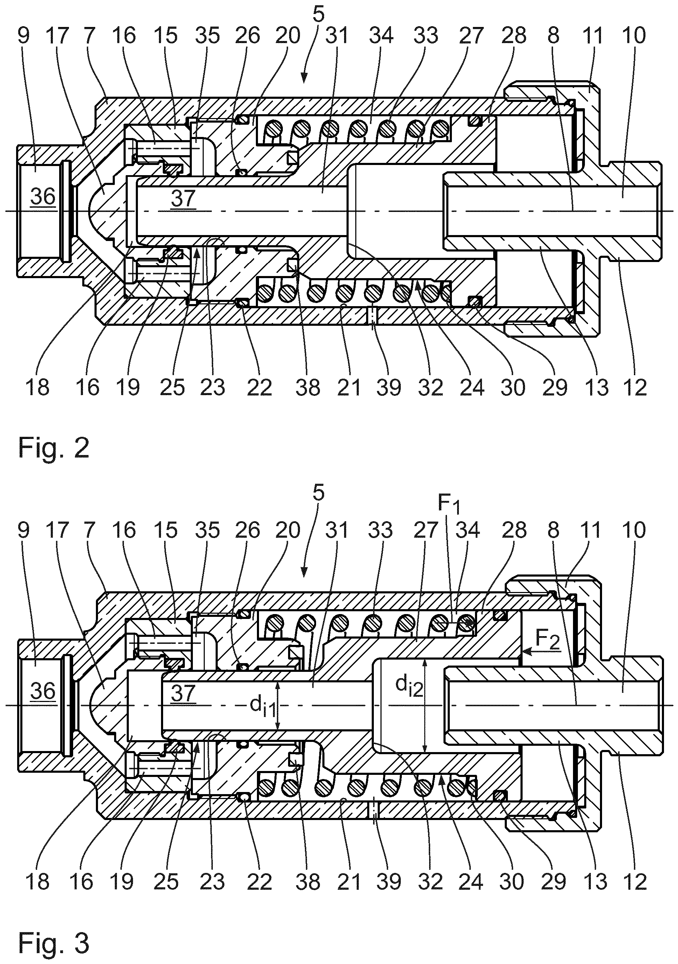

Nachfolgend wird anhand der Fig. 2 bis 4 ein Druckreduzier-Ventil 5 gemäß einem nicht erfindungsgemäßen Ausführungsbeispiel näher erläutert. Das Druckreduzier-Ventil 5 umfasst ein Ventilgehäuse 7, das bezüglich einer Längsachse 8 rotationssymmetrisch ausgeführt ist. Das Ventilgehäuse 7 weist eine Eingangsöffnung 9 auf, mit der das Druckreduzier-Ventil 5 mit dem Druckbehälter 2 und insbesondere mit dem daran befestigten Abgabeventil 3 verbunden werden kann. Das Ventilgehäuse 7 ist im Wesentlichen rohrförmig ausgeführt. Die Eingangsöffnung 9 ist an einem ersten stirnseitigen Ende des Ventilgehäuses 7 angeordnet. An einem zweiten, dem ersten stirnseitigen Ende gegenüberliegenden zweiten stirnseitigen Ende des Ventilgehäuses 7 ist eine Ausgangsöffnung 10 vorgesehen. Die Ausgangsöffnung 10 dient zum Verbinden des Druckreduzier-Ventils 5 mit der Löschmedium-Abgabevorrichtung 6. Gemäß dem gezeigten Ausführungsbeispiel ist die Ausgangsöffnung 10 in einem auf das Ventilgehäuse 7 aufschraubbaren Ventilgehäuse-Deckel 11 integriert. Der Ventilgehäuse-Deckel 11 ist lösbar an dem Ventilgehäuse 7 montierbar. An dem Ventilgehäuse-Deckel 11 ist ein Anschlussstutzen 12 für die Löschmedium-Abgabevorrichtung 6 einteilig angeformt. Der Anschlussstutzen 12 erstreckt sich in Form eines Hülsenabschnitts 13 konzentrisch zur Längsachse 8 in einen das Ventilgehäuse 7 umgebenden Innenraum. Zwischen der Eingangsöffnung 9 und der Ausgangsöffnung 10 ist ein Strömungskanal 14 angeordnet.

Benachbart zu der Eingangsöffnung 9 ist ein Fluidströmungs-Leitelement 15 vorgesehen. Das Fluidströmungs-Leitelement 15 ermöglicht eine Beeinflussung der Fluidströmung entlang des Strömungskanals 14. Das Fluidströmungs-Leitelement 15 weist mehrere exzentrisch und parallel zur Längsachse 8 angeordnete Strömungsbohrungen 16 auf. Weiterhin weist das Fluidströmungs-Leitelement 15 eine zentral angeordnete Abdeckkappe 17 auf, die eine Umlenkung der Strömung des Löschmediums durch das Fluidströmungs-Leitelement 15 ermöglicht. Die Abdeckkappe 17 bewirkt, dass das Löschmedium durch die Strömungsbohrungen 16 strömt. An einer der Eingangsöffnung 9 abgewandten Rückseite weist das Fluidströmungs-Leitelement 15 eine Eintauch-Ausnehmung 18 auf. Die Eintauch-Ausnehmung 18 ist hohlzylindrisch ausgeführt und weist an einer äußeren Zylinder-Mantelfläche ein erstes Dichtungselement 19 auf. Das Fluidströmungs-Leitelement 15 ist dreiteilig ausgeführt, wobei die Abdeckkappe 17 auf den Grundkörper des Fluidströmungs-Leitelements 15 entlang der Längsachse 8 aufschraubbar ist. Zwischen der Abdeckkappe 17 und dem Grundkörper des Fluidströmungs-Leitelements 15 ist das erste Dichtungselement 10 axial gehalten. Gemäß dem gezeigten Ausführungsbeispiel weisen sowohl die Abdeckkappe 17 als auch der Grundkörper des Fluidströmungs-Leitelements 15 einen sich entlang der Längsachse 8 erstreckenden Vorsprung auf, so dass das erste Dichtungselement 9 in radialer Richtung bezogen auf die Längsachse 8 an dem Fluidströmungs-Leitelement 15 gehalten ist. Das Fluidströmungs-Leitelement 15 ist derart ausgeführt, dass es mit einem Außendurchmesser an einer Innenwand des Ventilgehäuses 7 eingefasst ist.

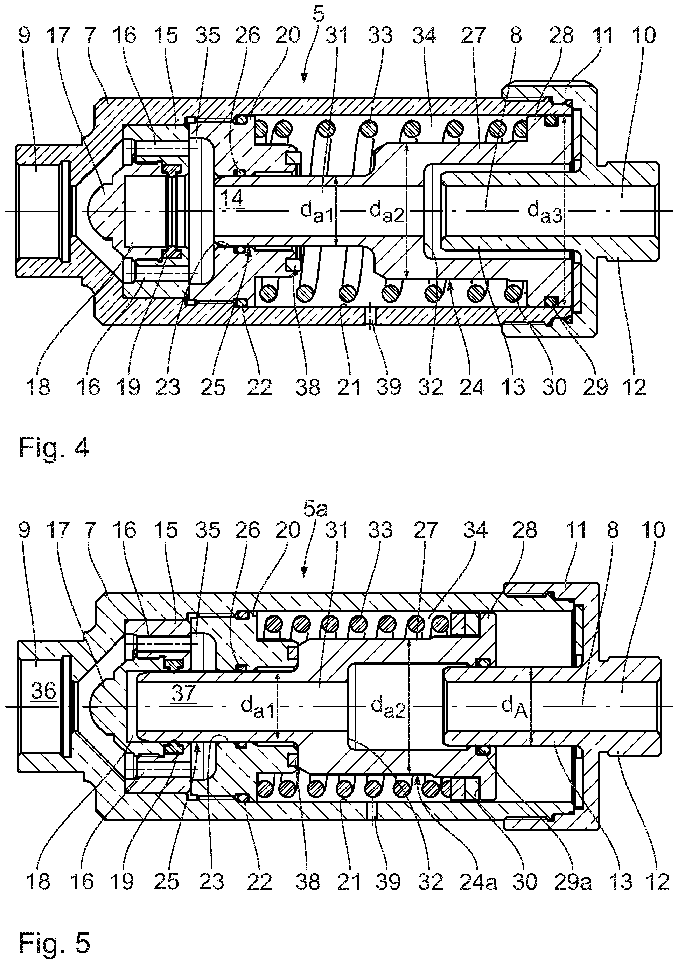

Entlang der Längsachse 8 ist ausgehend von der Eingangsöffnung 9 nach dem Fluidströmungs-Leitelement 15 ein Führungs-Element 20 angeordnet. Das Führungs-Element 20 ist mittels eines Außengewindes an einem dazu korrespondierenden Innengewinde des Ventilgehäuses 7 in das Ventilgehäuse 7 eingeschraubt. Das Führungs-Element 20 dient zur axialen Sicherung entlang der Längsachse 8 des Fluidströmungs-Leitelements 15. Das Führungs-Element 20 ist gegenüber einer Innenwand 21 des Ventilgehäuses 7 mittels eines O-Rings 22 abgedichtet. Das Führungs-Element 20 ist hohl ausgeführt und weist eine innere hohlzylindrisch geformte Führungsfläche 23 auf. Das Führungs-Element 20 dient zur Führung eines Druckregel-Kolbens 24, der entlang der Längsachse 8 in dem Ventilgehäuse 7 zwischen einer in Fig. 4 dargestellten Offenstellung und einer in Fig. 2 und 3 dargestellten Schließstellung verlagerbar ist. Die hohlzylindrische Führungsfläche 23 des Führungs-Elements 20 weist einen Innendurchmesser derart auf, dass eine geführte Verlagerung eines Führungs-/Dichtungsabschnitts 25 des Druckregel-Kolbens 24 möglich ist. Insbesondere entspricht der Innendurchmesser der Führungsfläche 23 im Wesentlichen einem Außendurchmesser des Druckregel-Kolbens 24 im Bereich des Führungs-/Dichtungsabschnitts 25.

Im Bereich der Führungsfläche 23 ist ein drittes Dichtungselement 26 zum abdichtenden Anliegen an dem Führungs-/Dichtungsabschnitt 25 vorgesehen.

Der Druckregel-Kolben 24 ist einteilig ausgeführt. Der Druckregel-Kolben 24 ist entlang der Längsachse 8 im Wesentlichen terrassenförmig ausgeführt mit einem ersten Außendurchmesser dₐ₁ im Bereich des Führungs-/Dichtungsabschnitts 25, einem zweiten Außendurchmesser dₐ₂ im Bereich eines Zwischenabschnitts 27 und einem dritten Außendurchmesser dₐ₃ im Bereich eines Basisabschnitts 28. An einer äußeren Mantelfläche ist der Basisabschnitt 28 mittels eines zweiten Dichtungselements 29 gegenüber der Innenwand 21 des Ventilgehäuses 7 abgedichtet. Eine ringförmige Stirnfläche 30 des Basisabschnitts 28 ist dem Führungs-Element 20 zugewandt.

Der Druckregel-Kolben 24 weist eine zentral angeordnete, konzentrisch zur Längsachse 8 orientierte Durchgangsbohrung 31 auf. Im Bereich des Führungs-/Dichtungsabschnitts 25 weist die Durchgangsbohrung 31 einen ersten Innendurchmesser dᵢ₁ auf. Im Bereich des Basisabschnitts 28 und zumindest abschnittsweise im Bereich des Zwischenabschnitts 27 weist die Durchgangsbohrung 31 einen zweiten Innendurchmesser dᵢ₂ auf, der größer ist als der erste Innendurchmesser dᵢ₁. An dem Übergang von dem ersten Innendurchmesser dᵢ₁ zu dem zweiten Innendurchmesser dᵢ₂ ist eine senkrecht zur Längsachse 8 orientierte Innenstirnfläche 32 angeordnet. Der zweite Innendurchmesser dᵢ₂ ist derart ausgeführt, dass der Hülsenabschnitt 13 des Ventilgehäuse-Deckels 11 in den Druckregel-Kolben 24 zumindest abschnittsweise eintauchen kann. Zwischen dem Führungs-Element 20 und der Stirnfläche 30 des Druckregel-Kolbens 24 ist ein Kraftspeicher-Element in Form einer Schraubenfeder 33 angeordnet. Die Schraubenfeder 33 ist eine Druckfeder. Von dem Ventilgehäuse 7, dem Druckregel-Kolben 24 und dem Führungs-Element 20 ist ein im Wesentlichen ringförmiger Hohlraum begrenzt, der eine Feder-Kammer 34 bildet. In der in Fig. 4 dargestellten Offenstellung des Druckregel-Kolbens 24 ist die Schraubenfeder 33 im Wesentlichen entspannt. Die Schraubenfeder 33 übt keine Kraft auf die Stirnfläche 30 des Druckregel-Kolbens 24 aus. Das bedeutet, dass in der Offenstellung, also wenn das Druckreduzier-Ventil 5 sich in einem drucklosen Zustand befindet, die Schraubenfeder 33 derart ausgelegt ist, dass die von der Schraubenfeder 33 verursachte Öffnungskraft F₁ den Druckregel-Kolben 24 gemäß der Darstellung in Fig. 4 derart nach rechts verlagert, dass der Druckregel-Kolben 24 in der Offenstellung vorliegt. Das bedeutet, dass der Druckregel-Kolben 24 üblicherweise in der geöffneten Anordnung, also in der Offenstellung, durch die Schraubenfeder 33 gedrückt wird.

Es ist auch möglich, die Schraubenfeder 33 derart auszulegen, dass sie in der in Fig. 4 dargestellten Offenstellung des Druckregel-Kolbens 24 eine Kraft auf die Stirnfläche 30 des Druckregel-Kolbens 24 ausübt. Die Schraubenfeder 33 kann in der Offenstellung also kraftlos oder vorgespannt eingebaut sein. Das erste Dichtungselement 19 und das dritte Dichtungselement 26 sind derart ausgeführt, dass sie an dem ersten Außendurchmesser dₐ₁ des Führungs-/Dichtungs-abschnitts 25 des Druckregel-Kolbens 24 abdichtend anliegen.

Im Folgenden wird die Funktionsweise des Druckreduzier-Ventils 5 näher erläutert.

Sofern sich der Druckregel-Kolben 24, wie in Fig. 4 dargestellt, in der Offenstellung befindet, ist der Druckregel-Kolben 24 mit dem Führungs-/ Dichtungsabschnitt 25 beabstandet von dem ersten Dichtungselement 19 angeordnet. Die Anlage 1 wird durch eine Auslöse-Einheit ausgelöst, die insbesondere pneumatisch, manuell oder elektrisch angesteuert werden kann. Die Auslöse-Einheit wirkt mit einem Druckbehälter-Ventil zusammen, das standardmäßig geschlossen ist. Durch das Auslösen der Auslöse-Einheit, die beispielsweise als temperaturempfindliches Auslöseelement, insbesondere als platzender Auslöseschlauch ausgeführt sein kann, bewirkt eine Betätigung des Druckbehälter-Ventils derart, dass der Druckbehälter freigegeben wird. Löschmedium, das von dem Druckbehälter 2 mit Hochdruck p_{H} über die Eingangsöffnung 9 dem Druckreduzier-Ventil 5 zugeführt wird, kann entlang der Abdeckkappe 17 und durch die Strömungsbohrungen 16 des Fluidströmungs-Leitelements 15 strömen. Von dort strömt das Löschmedium über eine stirnseitige Ausnehmung 35 in dem Führungs-Element 20 in die Durchgangsbohrung 31 und kann schließlich über die Ausgangsöffnung 10 und den Anschlussstutzen 12 in die Löschmedium-Abgabevorrichtung 6 gelangen. Das bedeutet, dass ausgehend von der Eingangsöffnung 9 über die Strömungsbohrungen 16, die stirnseitige Ausnehmung 35, die Durchgangsbohrung 31 und die Ausgangsöffnung 10 ein durchgängiger Strömungskanal 14 gebildet ist. Insbesondere ist der durchgängige Strömungskanal 14 derart ausgeführt, dass eine senkrecht zur Längsachse 8 orientierte Strömungskanal-Querschnittsfläche entlang des Strömungskanals 14 im Wesentlichen konstant ist. Insbesondere ist dazu die Innenbohrung des Druckregel-Kolbens 24 und die Innenbohrung des Anschlussstutzens 12 mit im Wesentlichen identischen InnenDurchmessern ausgeführt. Die Summen-Querschnittsfläche, insbesondere im Bereich des Fluidströmungs-Leitelements 15 entlang der Strömungsbohrungen 16 und der Abdeckkappe 17 ist im Wesentlichen identisch zu der kreisförmigen Strömungskanal-Querschnittsfläche im Bereich des Druckregel-Kolbens 24 und des Anschlussstutzens 12.

Aufgrund der im Wesentlichen unveränderlichen Strömungskanal-Querschnittsfläche entlang der Längsachse 8 ist eine ungedrosselte Gasströmung von der Eingangsöffnung 9 zu der Ausgangsöffnung 10 in der Offenstellung des Druckregel-Ventils 5 gewährleistet.

Sobald Löschmedium, das mit Hochdruck p_{H} durch die Durchgangsbohrung 31 in den Bereich des Zwischenabschnitts 27 mit dem zweiten Innendurchmesser dᵢ₂ strömt, bewirkt der Druck, der auf eine effektive Kolbenfläche A_{eff} wirkt, eine Schließkraft F₂ aus. Die effektive Kolbenfläche A_{eff} ist der Ausgangsöffnung 10 zugewandt. Der von dem Löschmedium verursachte Druck geht also von einem, in dem Ventilgehäuse 7 rechts dargestellten Bereich, benachbart zu der Ausgangsöffnung 10 aus. Die Schließkraft F₂ ist von der Ausgangsöffnung 10 zur Eingangsöffnung 9 entlang der Längsachse 8 gerichtet. Die Schließkraft F₂ bewirkt also eine Verlagerung des Druckregel-Kolbens gemäß der Darstellung in Fig. 4 nach links. Die effektive Fläche A_{eff} ergibt sich aus einer Differenz einer zweiten Dichtungsfläche A₂ und einer ersten Dichtungsfläche A₁. Die erste Dichtungsfläche A₁ ist eine Kreisfläche mit dem ersten Außendurchmesser dₐ₁ des Druckregel-Kolbens 24. Die zweite Dichtungsfläche A₂ ist eine Kreisfläche mit dem dritten Außendurchmesser dₐ₃ des Druckregel-Kolbens 24. Die von dem Löschmedium verursachte Schließkraft F₂ ist größer als eine von der Schraubenfeder 33 auf die Stirnfläche 30 ausgeübte Öffnungskraft F₁, die von der Eingangsöffnung 9 zur Ausgangsöffnung 10 entlang der Längsachse 8 hin gerichtet ist. Das bedeutet, dass die Öffnungskraft F₁ entgegen der Schließkraft F₂ gerichtet ist. Die beiden Kräfte F₁ und F₂ sind insbesondere entgegengesetzt zueinander orientiert. Die beiden Kräfte F₁ und F₂ sind insbesondere konzentrisch zur Längsachse 8 gerichtet. Die Schließkraft F₂ ist betragsmäßig größer als die Öffnungskraft F₁, so dass eine effektive Kraft auf den Druckregel-Kolben 24 entlang der Längsachse 8 von der Ausgangsöffnung 10 zur Eingangsöffnung 9 hin gerichtet ist. Das bedeutet, dass der Druckregel-Kolben 24 nach links verlagert wird.

Falls der Druckregel-Kolben 24 mit dem Führungs-/Dichtungsabschnitt 25 an dem ersten Dichtungselement 19 abdichtend anliegt, ist der Strömungskanal 14 unterbrochen. Das bedeutet, dass die Eingangsöffnung 9 von der Ausgangsöffnung 10 fluiddicht getrennt ist. Der Druckregel-Kolben 24 befindet sich in der Schließstellung. In der Schließstellung ist eine Hochdruck-Kammer 36 gebildet, die von der Eingangsöffnung 9 entlang eines Strömungsweges des Strömungskanals 14 bis hin zu dem ersten Dichtungselement 19 begrenzt ist. In der Hochdruck-Kammer 36 liegt das Löschmedium mit Hochdruck p_{H} an, mit dem das Löschmedium im Druckbehälter 2 bevorratet ist. Von der Hochdruck-Kammer 36 fluiddicht getrennt ist eine Niederdruck-Kammer 37, die gemäß dem gezeigten Ausführungsbeispiel die Eintauch-Ausnehmung 18, die Durchgangsbohrung 31 und die Ausgangsöffnung 10 umfasst. In der Niederdruck-Kammer 36 liegt das Löschmedium mit Niederdruck p_{N} vor. In der Schließstellung des Druckregel-Kolbens 24 liegt der Niederdruck als statischer Ausgangsdruck an. Das bedeutet, dass keine Fluidströmung erfolgt. Es herrscht Strömungsstillstand, da die Ausgangsöffnung 10 verschlossen ist oder an der Ausgangsöffnung 10 ein verschlossenes Leitungssystem angeschlossen ist. Ein Mindest-Niederdruck, der erforderlich ist, um den Druckregel-Kolben 24 von der Offenstellung in die Schließstellung zu verlagern, wird insbesondere ausschließlich durch die Druckfeder 33 bestimmt. Das bedeutet, dass der Hochdruck p_{H}, der an der Eingangsöffnung 9 des Ventilgehäuses 7 anliegt, keinen Einfluss auf die Verlagerung des Druckregel-Kolbens 24 in dem Ventilgehäuse hat. Mit dem Niederdruck p_{N} ist das Löschmedium in der Löschmedium-Abgabevorrichtung 6 bereitgestellt. Das bedeutet, dass das Druckreduzier-Ventil 5 es ermöglicht, Löschmedium dauerhaft in der Löschmedium-Abgabevorrichtung 6 bei reduziertem Abgabedruck p_{N} bereitzustellen.

Bei einer Auslösung der automatischen Brandlöschanlage 1 wird Löschmedium über die Löschmedium-Abgabevorrichtung 6 an die Umgebung abgegeben. Das bedeutet, dass ausgehend von der Schließstellung des Druckregel-Kolbens 24 eine Reduzierung des Niederdrucks p_{N} auftritt. Sobald der Niederdruck p_{N} unterhalb eines kritischen Schwellenwertes sinkt und dadurch die Schließkraft F₂ derart reduziert wird, dass sie kleiner ist als die Öffnungskraft F₁ der Schraubenfeder 33, wird der Druckregel-Kolben 24 nach rechts, also zur Ausgangsöffnung 10 hin, verlagert. Sobald der Druckregel-Kolben 24 derart angeordnet ist, dass das erste Dichtungselement 19 nicht mehr dichtend an dem Führungs-/Dichtungsabschnitt 25 des Druckregel-Kolbens 24 anliegt, sich der Druckregel-Kolben 24 also in der Offenstellung befindet, kann Löschmedium entlang des Strömungskanals 14 zu der Ausgangsöffnung gelangen und die Löschmedium-Abgabevorrichtung 6 mit konstantem Austrag des Löschmediums versorgen.

Der Austrag des Löschmediums erfolgt mit konstantem Niederdruck p_{N}. Da sich der Druckregel-Kolben 24 in der Offenstellung befindet, findet ein Fluidfluss also eine Strömung statt. Das bedeutet, dass der Austrag bei einem dynamischen Ausgangsdruck als Niederdruck p_{N} erfolgt. Der dynamische Ausgangsdruck, also der Niederdruck p_{N} bei Offenstellung des Druckregel-Kolbens 24, hängt von der Strömungsgeschwindigkeit des Löschmediums und somit von der Größe der Austrittsöffnungen in Form von Düsen und einer maximalen Durchflussleistung des Druckreduzier-Ventils 5 ab. Der dynamische Ausgangsdruck ist grundsätzlich kleiner als ein statischer Ausgangsdruck. Der statische Ausgangsdruck liegt an, wenn sich der Druckregel-Kolben 24 in einer Schließstellung befindet gemäß Fig. 2, 3.

Das bedeutet, dass das Löschmedium mit einem Niederdruck p_{N} ausgetragen wird, der geringer ist als der statische Niederdruck p_{N}, mit dem das Löschmedium in der Löschmedium-Abgabevorrichtung 6 bevorratet ist. Der Austrag des Löschmediums erfolgt mit konstantem Niederdruck p_{N}, da die Einflussfaktoren, also die Größe der Austrittsöffnungen und die maximal mögliche Durchflussleistung, durch das Druckreduzier-Ventil 5 unveränderlich sind. Dies gilt zumindest, solange der Hochdruck p_{H} im Druckbehälter 2 größer ist als der Niederdruck p_{N} an der Ausgangsöffnung 10. Auf den Druckregel-Kolben 24 wirken während des Löschmediumaustrags die Schließkraft F₂ und die von der Schraubenfeder 33 ausgeübte Öffnungskraft F₁, die der Schließkraft F₂ entgegenwirkt. Gleichzeitig wirkt eine Reibkraft auf den Druckregel-Kolben 24. Aufgrund der Federkennlinie der Schraubenfeder 33 kann der Druckregel-Kolben 24 während des Löschmediumaustrags eine Zwischenstellung einnehmen, die insbesondere zwischen einer in Fig. 2 dargestellten Schließstellung und zwischen einer in Fig. 4 dargestelllten Offenstellung sich befindet.

Ein Schließen des Druckreduzier-Ventils 5, also eine Verlagerung des Druckregel-Kolbens 24 von der Offenstellung in die Schließstellung, erfolgt beispielsweise dann, wenn Austrittsöffnungen der Löschmedium-Abgabevorrichtung verschlossen sind oder verschlossen werden und deshalb ein Strömungsstillstand eintritt. Ein Schließen des Druckreduzier-Ventils 5 erfolgt auch dann, wenn beispielsweise ein sprunghafter Druckanstieg an der Eingangsöffnung 9 anliegt. Ein sprunghafter Druckanstieg kann beispielsweise durch eine Auslösung der Brandlöschanlage 1 verursacht werden. Ein derartiger Schließvorgang wird dadurch erreicht, dass der Druckregel-Kolben 24 ausgehend von der Darstellung in Fig. 4 nach links verlagert wird, bis der Druckregel-Kolben 24 mit dem Führungs-/Dichtungsabschnitt 25 an dem ersten Dichtungselement 19 dichtend anliegt. In dieser Position des Druckregel-Kolbens ist die Eingangsöffnung 9 von der Ausgangsöffnung 10 fluiddicht getrennt. Das Druckreduzier-Ventil 5 ist geschlossen.

Dadurch, dass das über die Eingangsöffnung 9 mit Hochdruck p_{H} in das Druckreduzier-Ventil zugeführte Löschmedium keine Axialkraft auf den Druckregel-Kolben 24 ausübt, wirken sich auch Druckschwankungen bei Löschmediumabgabe über das Abgabeventil 3 nicht negativ auf die Abgabe des Löschmediums mittels des Druckreduzier-Ventils 5 und die Löschmedium-Abgabevorrichtung 6 aus. Der Grund, dass das Löschmedium, das über die Eingangsöffnung 9 dem Druckreduzier-Ventil 5 zugeführt wird, keine Axialkraft auf den Druckregel-Kolben 24 ausübt ist, dass der Druckregel-Kolben 24 mittels des dritten Dichtungselements 26 einen Dichtungsquerschnitt aufweist, der mit dem vom ersten Dichtungselement 19 verursachten Dichtungsquerschnitt identisch ist.

An einer der Ausgangsöffnung 10 zugewandten Stirnseite weist das Führungs-Element 20 ein ringförmiges Anschlagdämpfungs-Element 38 auf. Das Anschlagdämpfungs-Element 38 dient zum Dämpfen einer Anschlagbewegung des Druckregel-Kolbens 24 gegen das Führungs-Element 20.

In der Feder-Kammer 34 ist eine Entlüftungsbohrung 39 vorgesehen. Die Entlüftungsbohrung 39 ermöglicht ein Entweichen von Luft aus der Feder-Kammer 34 an die Umgebung, wenn der Druckregel-Kolben 24 von der Offenstellung gemäß Fig. 4 in eine Schließstellung gemäß Fig. 2 oder 3 verlagert wird. Aus den Darstellungen in Fig. 2 bis 4 wird insbesondere deutlich, dass verschiedene Schließstellungen und verschiedenen Offenstellungen des Druckregel-Kolbens 24 denkbar sind. Wesentlich ist, dass in der Offenstellung eine Fluidströmung von der Eingangsöffnung 9 zur Ausgangsöffnung 10 ermöglicht ist. Dagegen ist in der Schließstellung des Druckregel-Kolbens 24 eine Fluidströmung von der Eingangsöffnung 9 zu der Ausgangsöffnung 10 verhindert. Das erste Dichtungselement 19 liegt an dem Druckregel-Kolben 24 an einer äußeren Zylindermantelfläche in der Schließstellung umfangsseitig an. Der erste Innendurchmesser dᵢ₁ wird auch als Nennweite oder Durchflussquerschnitt des Druckregel-Kolbens 24 bezeichnet. Der erste Innendurchmesser dᵢ₁ beträgt in dem gezeigten Ausführungsbeispiel 12 mm.

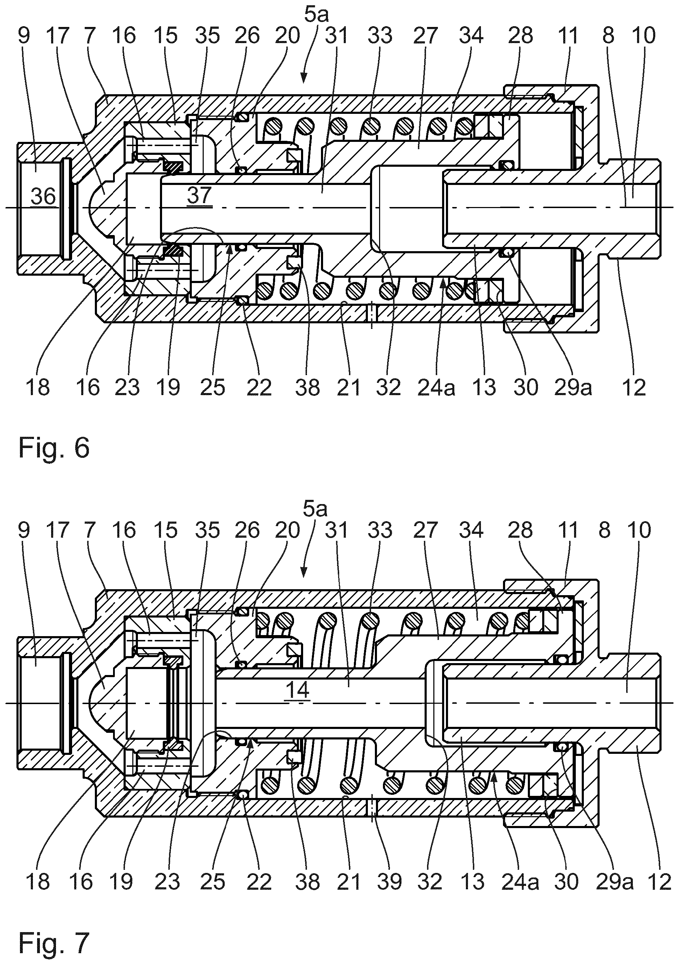

Im Folgenden wird unter Bezugnahme auf die Fig. 5 bis 7 ein weiteres nicht erfindungsgemäßes Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied des Druckreduzier-Ventils 5a gemäß dem zweiten Ausführungsbeispiel gegenüber dem ersten Ausführungsbeispiel besteht in der Ausführung des Druckregel-Kolbens 24a. Das zweite Dichtungselement 29a ist an einer inneren Zylindermantelfläche angeordnet und dichtet den Druckregel-Kolben 24a nach innen an dem Hülsenabschnitt 13 des Ventilgehäuse-Deckels 11 ab. Das bedeutet, dass gegenüber dem ersten Ausführungsbeispiel die effektive Kolbenfläche A_{eff} reduziert ist. Die zweite Dichtungsfläche A₂ ist reduziert und hat den Außendurchmesser d_{A} des Hülsenabschnitts 13. Der Außendurchmesser d_{A} des Hülsenabschnitts 13 stellt somit den größeren der beiden Dichtdurchmesser am Druckregel-Kolben 24a dar. Der kleinere der beiden Dichtdurchmesser am Druckregel-Kolben 24a ist der erste Außendurchmesser dₐ₁ des Druckregel-Kolbens 24a im Bereich des Führungs-/Dichtungsabschnitts 25. Der erste Außendurchmesser dₐ₁ definiert die erste Dichtungsfläche A₁. Die erste Dichtungsfläche A₁ ist gegenüber dem ersten Ausführungsbeispiel unverändert. In Fig. 5 sind die beiden Dichtdurchmesser, also dₐ₁ und d_{A} jeweils gestrichelt angedeutet.

Dadurch, dass gegenüber dem Druckreduzier-Ventil 5a gemäß dem ersten Ausführungsbeispiel die effektive Kolbenfläche A_{eff} reduziert ist, ist beim Druckreduzier-Ventil 5a der Niederdruck p_{N} größer als bei dem Druckreduzier-Ventil gemäß dem ersten Ausführungsbeispiel. Dadurch, dass der Druckregel-Kolben 24a an einer Innenseite an dem Hülsenabschnitt 13 abgedichtet ist, sind die Strömungsbedingungen des Löschmediums durch das Druckreduzier-Ventil 5a verbessert.

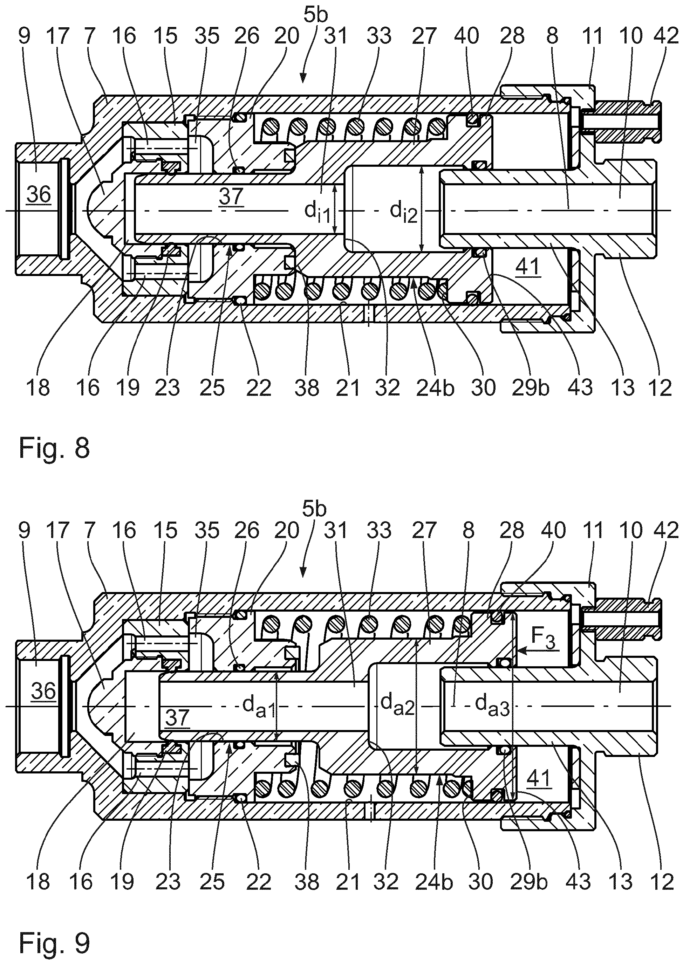

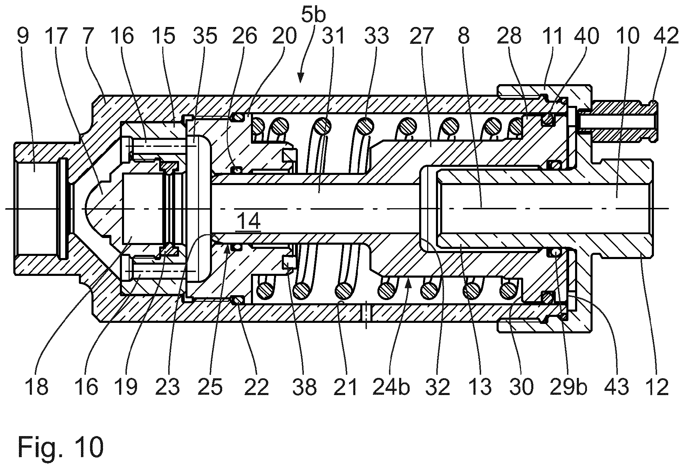

Im Folgenden wird unter Bezugnahme auf die Fig. 8 bis 10 ein weiteres nicht erfindungsgemäßes Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Das Druckreduzier-Ventil 5b gemäß dem dritten Ausführungsbeispiel entspricht im Wesentlichen dem Druckreduzier-Ventil 5a gemäß dem zweiten Ausführungsbeispiel, wobei der Druckregel-Kolben 24b mit dem zweiten Dichtungselement 29b an dem Hülsenabschnitt 13 nach innen und mit einem vierten Dichtungselement 40 an einer äußeren Zylindermantelfläche gegenüber der Innenwand 21 des Ventilgehäuses 7 abgedichtet ist. Von dem Druckregel-Kolben 24b, dem Ventilgehäuse 7, dem Ventilgehäuse-Deckel 11 und dem Hülsenabschnitt 13 wird eine ringförmige Steuerdruck-Kammer 41 begrenzt. Über ein Steuerdruck-Ventil 42 kann Steuerdruck-Medium in die Steuerdruck-Kammer 41 eingeleitet werden. Das Steuerdruck-Ventil 42 verhindert, dass Steuerdruck-Medium unbeabsichtigt aus der Steuerdruck-Kammer 41 entweicht. Der Steuerdruck ps, mit dem das Steuerdruck-Medium in der Steuerdruck-Kammer 41 vorliegt, ist beliebig einstellbar. Von dem mit Steuerdruck ps in der Steuerdruck-Kammer 41 bevorrateten Steuerdruck-Medium wird eine Steuerdruck-Schließkraft F₃ auf eine rückwärtige, der Steuerdruck-Kammer 41 zugewandte ringförmige Stirnfläche 43 ausgeübt. Die Steuerdruck-Schließkraft F₃ ist der Schließkraft F₂ gleichgerichtet und wirkt der Öffnungskraft F₁, die von der Schraubenfeder 33 verursacht wird, entgegen. Dadurch ist es möglich, den Niederdruck p_{N}, der in der Niederdruck-Kammer 37 und somit in der Löschmedium-Abgabevorrichtung 6 anliegt, zu beeinflussen und insbesondere zu reduzieren.

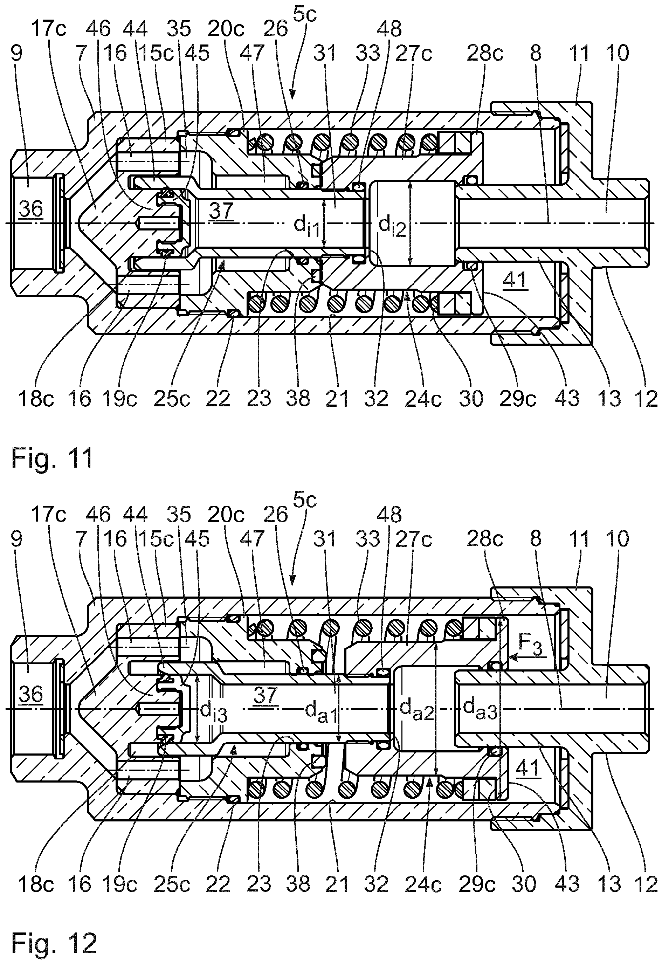

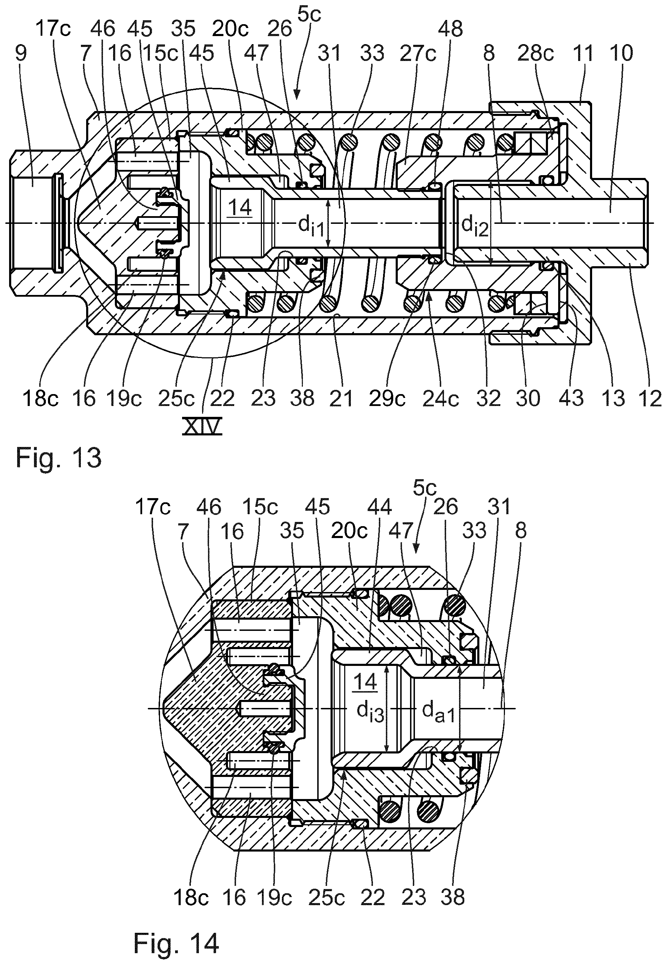

Im Folgenden wird unter Bezugnahme auf die Fig. 11 bis 14 ein Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Das Druckreduzier-Ventil 5c gemäß dem vierten Ausführungsbeispiel entspricht im Wesentlichen dem Druckreduzier-Ventil 5a gemäß dem zweiten Ausführungsbeispiel. Wesentlicher Unterschied ist, dass das erste Dichtungselement 19c als nach außen abdichtender O-Ring ausgeführt ist. Das bedeutet, das erste Dichtungselement 19c liegt in der in Fig. 11 gezeigten Schließstellung des Druckregel-Kolbens 24c an einer inneren Zylindermantelfläche des Druckregel-Kolbens an. Dazu weist der Führungs-/ Dichtungsabschnitt 25c einen dem Basisabschnitt 28c gegenüberliegend angeordneten, aufgeweiteten, napfförmigen Abschnitt 44 auf. Das erste Dichtungselement 19c liegt in der Schließstellung abdichtend an einer inneren Zylindermantelfläche des napfförmigen Abschnitts 44 an dem Druckregel-Kolben 24c an.

Das erste Dichtungselement 19c ist an dem Fluidströmungs-Leitelement 15c mittels einer entlang der Längsachse 8 aufschraubbaren Klemme 45 in axialer Richtung an dem Fluidströmungs-Leitelement 15c gehalten. Dazu weist das Fluidströmungs-Leitelement 15c einen zentralen, konzentrisch zur Längsachse 8 ausgeführten Befestigungsabschnitt 46 auf. Der Befestigungsabschnitt 46 ist zentral in der Eintauch-Ausnehmung 18c angeordnet. Die Eintauch-Ausnehmung 18c ist eine ringförmige Nut, in die der Druckregel-Kolben 24c mit dem napfförmigen Abschnitt 44 zum abdichtenden Anliegen an dem ersten Dichtungselement 19c eintauchen kann. Die Abdeckkappe 17c ist an einem der Eingangsöffnung 9 zugewandten Ende abgerundet ausgeführt.

Um die axiale Verlagerung des Druckregel-Kolbens 24c entlang der Längsachse 8 zu ermöglichen, weist das Führungs-Element 20c einen aufgeweiteten Abschnitt 47 auf. Der aufgeweitete Abschnitt 47 hat einen Innendurchmesser, der größer ist als der Außendurchmesser des napfförmigen Abschnitts 44 des Druckregel-Kolbens 24c. Das zweite Dichtungselement 29c ist zwischen dem Druckregel-Kolben 24c und dem Ventilgehäuse- Deckel 11 angeordnet.

Der napfförmige Abschnitt 44 ist derart ausgeführt, dass ein dritter Innendurchmesser dᵢ₃ im Wesentlichen gleich groß ist wie der erste Außendurchmesser dₐ₁. Insbesondere ist der dritte Innendurchmesser dᵢ₃ gleich groß wie der erste Außendurchmesser dₐ₁. Das bedeutet, dass das erste Dichtungselement 19c und das dritte Dichtungselement 26 eine identische erste Dichtungsfläche A₁ gemäß dem zweiten Ausführungsbeispiel des Druckreduzier-Ventils 5a aufweisen.

Der Druckregel-Kolben 24c ist zweiteilig ausgeführt. Ein erstes, in Fig. 11 links dargestelltes Teil umfasst den Führungs-/Dichtungsabschnitt 25c. Ein zweites, in Fig. 11 rechts dargestelltes Teil umfasst den Zwischenabschnitt 27c und den einteilig daran angeformten Basisabschnitt 28c. Die beiden Teile 25c und 27c, 28c des Druckregel-Kolbens 24c sind miteinander verschraubt. Dazu weist der Führungs-/Dichtungsabschnitt 25c an einem dem napfförmigen Abschnitt 44 abgewandten Ende ein Außengewinde auf, das mit einem Innengewinde des Zwischenabschnitts 27c korrespondiert. Aufgrund der zweiteiligen Ausführung des Druckregel-Kolbens 24c ist die Montage des Druckreduzier-Ventils 5c vereinfacht. Zur Abdichtung des Strömungskanals 14, insbesondere der Niederdruckkammer 37, ist die Schraubverbindung zwischen dem Führungs-/Dichtungsabschnitt 25c und dem Zwischenabschnitt 27c mit einem Druckregel-Kolben-Dichtungselement 48 abgedichtet.

Die Funktion des Druckreduzier-Ventil 5c entspricht im Wesentlichen der Funktion des Druckreduzier-Ventils 5a gemäß dem zweiten Ausführungsbeispiel. Wesentlicher Unterschied ist jedoch, dass das erste Dichtungselement 19c an einer inneren Zylindermantelfläche des napfförmigen Abschnitts 44 des Druckregel-Kolbens 24c in der Schließstellung abdichtend anliegt.

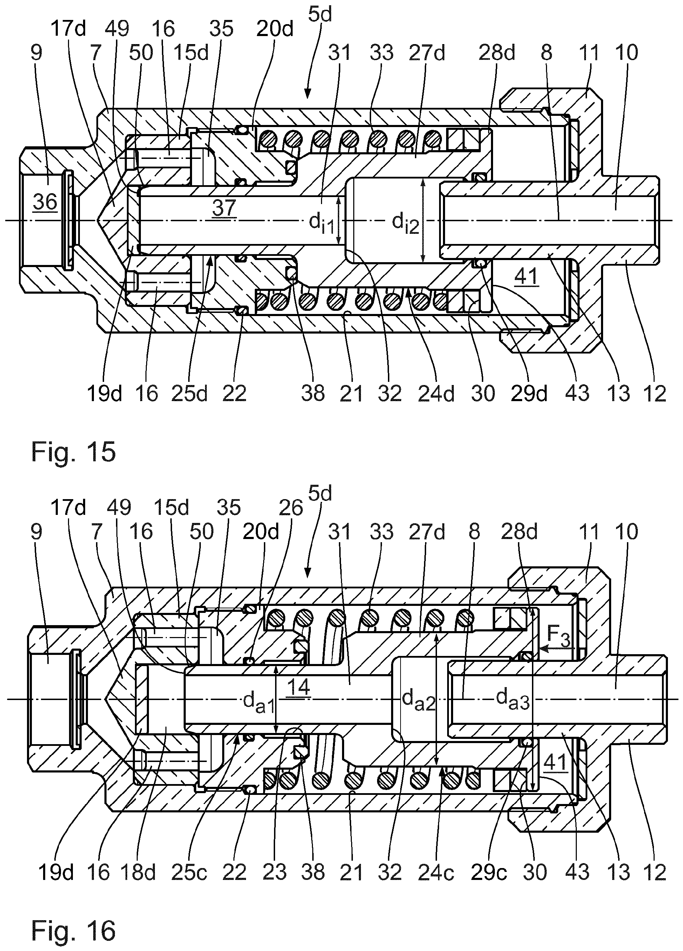

Im Folgenden wird unter Bezugnahme auf die Fig. 15 bis 18 ein fünftes nicht erfindungsgemäßes Beispiel beschrieben. Konstruktiv identische Teile erhalten dieselben Bezugszeichen wie bei den ersten vier Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Das Druckreduzier-Ventil 5d gemäß dem fünften Ausführungsbeispiel entspricht im Wesentlichen dem Druckreduzier-Ventil 5a gemäß dem zweiten Ausführungsbeispiel. Wesentlicher Unterschied gegenüber dem Druckreduzier-Ventil 5a ist die Ausführung des ersten Dichtungselements 19d. Das erste Dichtungselement 19d ist scheibenförmig ausgeführt und an einem der Abdeckkappe 17d des Fluidströmungs-Leitelements 15d zugewandten Bodenbereich der Eintauch-Ausnehmung 18d angeordnet.

In der in Fig. 15 dargestellten Schließstellung des Druckregel-Kolbens 25d, der insbesondere identisch ausgeführt ist wie der Druckregel-Kolben 25 gemäß dem zweiten Ausführungsbeispiel, liegt dieser mit einer ringförmigen Stirnfläche 49 abdichtend am ersten Dichtungselement 19d an.

Im Folgenden wird die Funktion des Druckreduzier-Ventils 5d näher erläutert. Ausgehend von der in Fig. 15 gezeigten Schließstellung des Druckregel-Kolbens 24d erfolgt eine Abgabe von Löschmedium über die nicht dargestellte Löschmedium-Abgabevorrichtung 6, die an der Ausgangsöffnung 10 angeschlossen ist. Entsprechend sinkt der Niederdruck p_{N}. Eine von dem Niederdruck verursachte Schließkraft auf den Druckregel-Kolben 24 d wird reduziert. Sobald die von der Schraubenfeder 33 auf den Druckregel-Kolben 24d ausgeübte Öffnungskraft, die der Schließkraft entgegengerichtet ist, größer ist als die Schließkraft, wird der Druckregel-Kolben 24d nach rechts verlagert und befindet sich beispielsweise in einer in Fig. 16 dargestellten Anordnung. In dieser Anordnung ist der Druckregel-Kolben 24d mit der ringförmigen Stirnfläche 49 von dem ersten Dichtungselement 19d beabstandet angeordnet. Insbesondere ist der Strömungskanal 14 zwischen der Eingangsöffnung 9 und der Ausgangsöffnung 10 nicht abgedichtet.

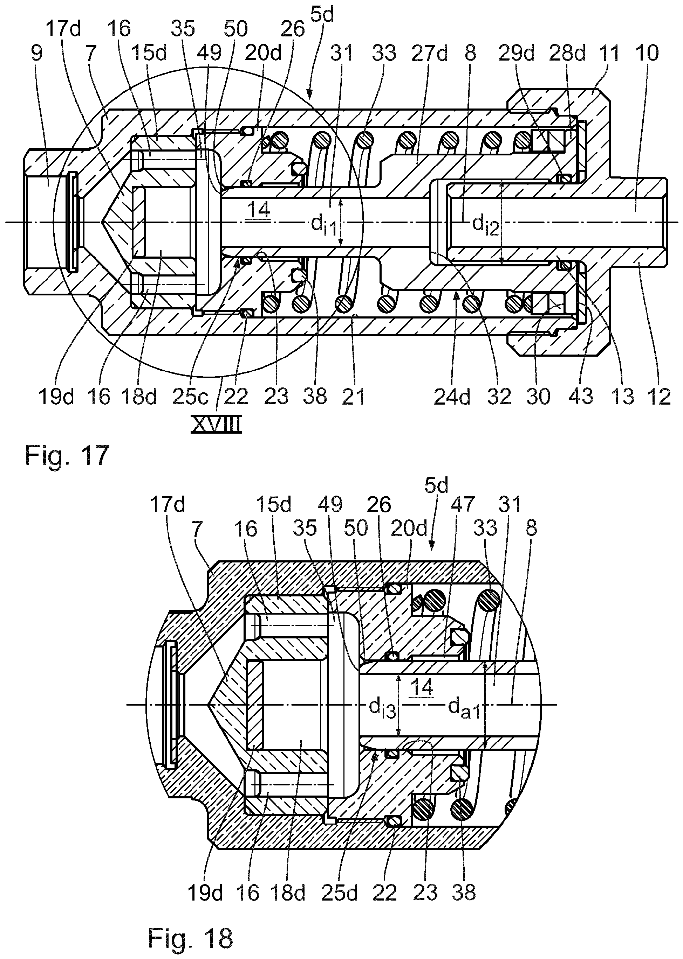

Der Druckregel-Kolben 24d befindet sich in der Anordnung in Fig. 16 nicht in einer Schließstellung. Im Bereich der ringförmigen Strinfläche 49 weist der Druckregel-Kolben 24d eine umlaufende Einführschräge 50 auf. Im Bereich der Einführschräge 50 ist der Außendurchmesser des Druckregel-Kolbens 24d ausgehend von dem ersten Außendurchmesser dₐ₁ bis zu einem reduzierten Außendurchmesser an der ringförmigen Stirnfläche 49 reduziert. Aufgrund der Reduzierung des Außendurchmessers resultiert ein Ringspalt zwischen dem Druckregel-Kolben 24d und dem Fluidströmungs-Leitelement 15d im Bereich der Einführschräge 50. Diese Strömungsquerschnittsverengung ermöglicht eine Drosselung des Fluidstroms des Löschmediums ausgehend von der Eingangsöffnung 9, über die Strömungsbohrungen 16 des Fluidströmungs-Leitelements 15d, über die genannte Querschnittsverengung, durch den Strömungskanal 14 zu der Ausgangsöffnung 10. In der Anordnung gemäß Fig. 17, 18 befindet sich der Druckregel-Kolben 24d in der Offenstellung. In dieser Anordnung kann Löschmedium ungehindert von der Eingangssöffnung 9 entlang des Strömungskanals 14 zu der Ausgangsöffnung 10 strömen.

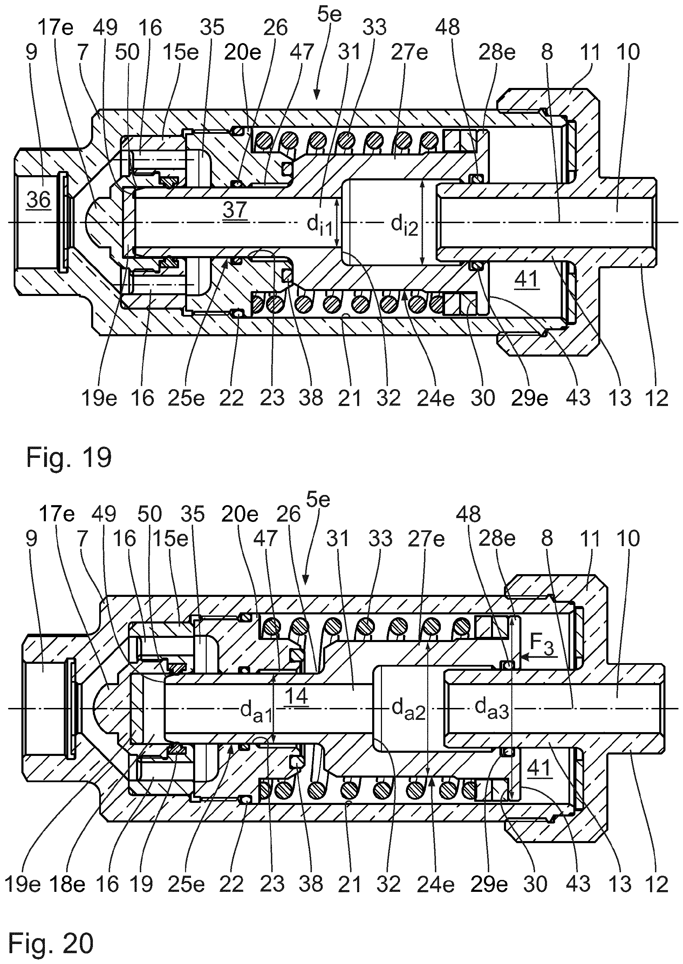

Im Folgenden wird unter Bezugnahme auf die Fig. 19 bis 22 ein weiteres nicht erfindungsgemäßes Ausführungsbeispiel beschrieben. Konstruktiv identische Teile erhalten dieselben Bezugszeichen wie bei den ersten fünf Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Das Druckreduzier-Ventil 5e gemäß dem sechsten Ausführungsbeispiel entspricht im Wesentlichen dem Druckreduzier-Ventil 5a gemäß dem zweiten Ausführungsbeispiel, wobei zusätzlich zu dem ersten Dichtungselement 19 eine an dem Druckregel-Kolben 24 eine stirnseitig abdichtende Dichtungsscheibe 19e als weiteres erstes Dichtungselement vorgesehen ist. Das erste Dichtungselement 19 gemäß dem sechsten Ausführungsbeispiel des Druckreduzier-Ventils 5e entspricht dem ersten Dichtungselement 19 gemäß dem ersten Ausführungsbeispiel des Druckreduzier-Ventils 5. Die Dichtungsscheibe 19e entspricht im Wesentlichen dem ersten Dichtungselement 19d gemäß dem fünften Ausführungsbeispiel, auf dessen Beschreibung hiermit verwiesen wird.

Die Funktionalität des Druckreduzier-Ventils 5e entspricht im Wesentlichen der Funktionalität des Druckreduzier-Ventils 5d, wobei eine zweifache Abdichtung des Druckregel-Kolbens 24e in der Eintauch-Ausnehmung 18e des Fluidströmungs-Leitelements 15e gewährleistet ist. Ausgehend von der Schließstellung des Druckregel-Kolbens 24e wird dieser bei Löschmediumabgabe nach rechts in eine Anordnung gemäß Fig. 20 verlagert. Jedoch ist ein abdichtendes Anliegen an einer äußeren Zylindermantelfläche im Bereich des Führungs-/Dichtungsabschnitts 25e gewährleistet, solange der Druckregel-Kolben 24e mit dem Führungs-/ Dichtungsabschnitt 25 im Bereich des ersten Dichtungselements 19 angeordnet ist.

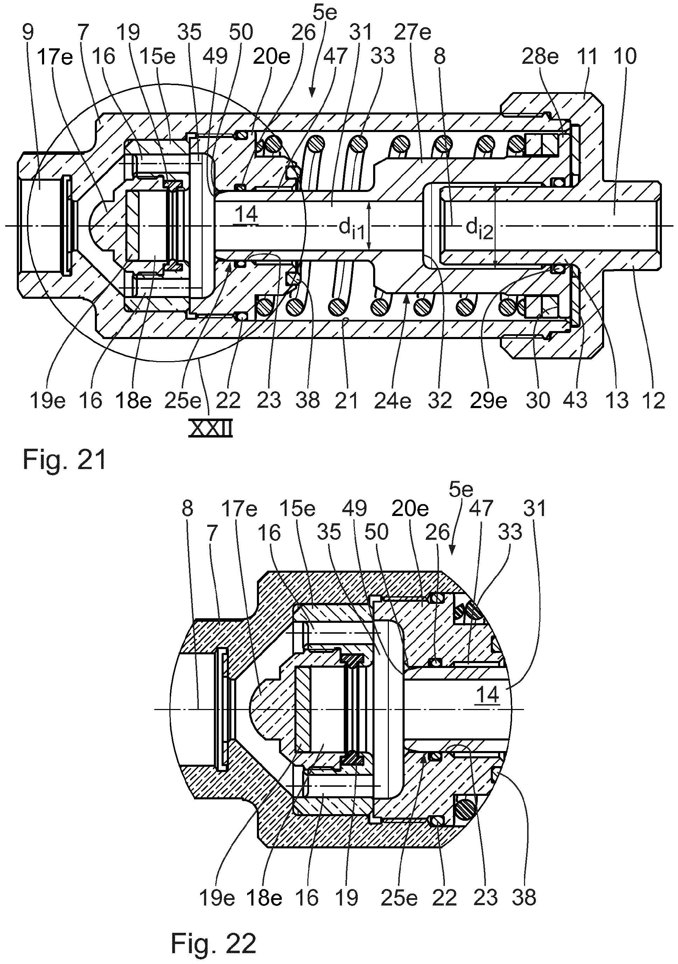

Im Gegensatz zu dem fünften Ausführungsbeispiel des Druckreduzier-Ventils 5d ist damit auch ein Abdichten des Strömungskanals 14 zuverlässig gewährleistet, wenn der Druckregel-Kolben 24e mit der ringförrmigen Stirnfläche 49 beabstandet von der Dichtscheibe 19e gemäß Fig. 20 angeordnet ist. Bedingung für das Abdichten des Strömungskanals 14 ist jedoch, dass der Druckregel-Kolben 24e im Führungs-/Dichtungsabschnitt 25e abdichtend an dem ersten Dichtungselement 19 anliegt. Sobald der Druckregel-Kolben 24, wie in Fig. 21 dargestellt, mit dem Führungs-/Dichtungsabschnitt 25 beabstandet von dem ersten Dichtungselement 19 angeordnet ist, ist eine Fluidströmung entlang des Strömungskanals 14 ungehindert möglich. In dieser Anordnung befindet sich der Druckregel-Kolben 24 in einer Offenstellung.

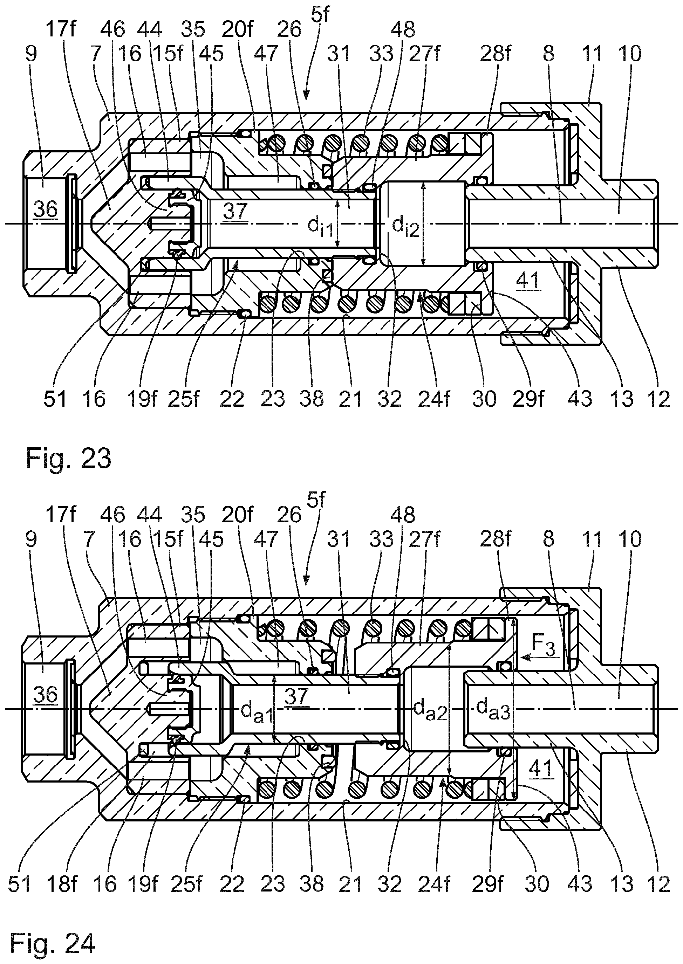

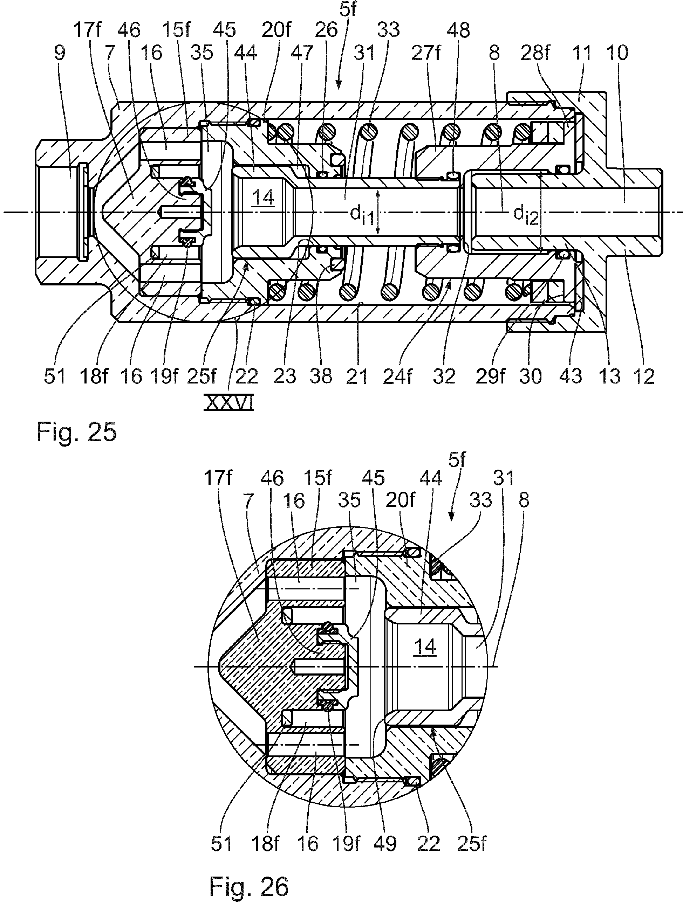

Im Folgenden wird unter Bezugnahme auf die Fig. 23 bis 26 ein weiteres Ausführungsbeispiel der Erfindung beschrieben. Konstruktiv identische Teile erhalten dieselben Bezugszeichen wie bei den ersten sechs Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

Das Druckreduzier-Ventil 5f gemäß dem siebten Ausführungsbeispiel entspricht im Wesentlichen dem Druckreduzier-Ventil 5c gemäß dem vierten Ausführungsbeispiel, wobei zusätzlich in einem Bodenbereich der Eintauch-Ausnehmung 18f eine zusätzliche, ringförmig ausgebildete Dichtungsscheibe 51 als weiteres Dichtungselement angeordnet ist. Die ringförmige Dichtungsscheibe 51 ermöglicht ein stirnseitiges abdichtendes Anliegen des Druckregel-Kolbens 24f mit der Stirnfläche 49. Zusätzlich erfolgt ein Abdichten des Strömungskanals 14 mit dem ersten Dichtungselement 19f an einer inneren Zylindermantelfläche am napfförmigen Abschnitt 44 des Druckregel-Kolbens 24f.

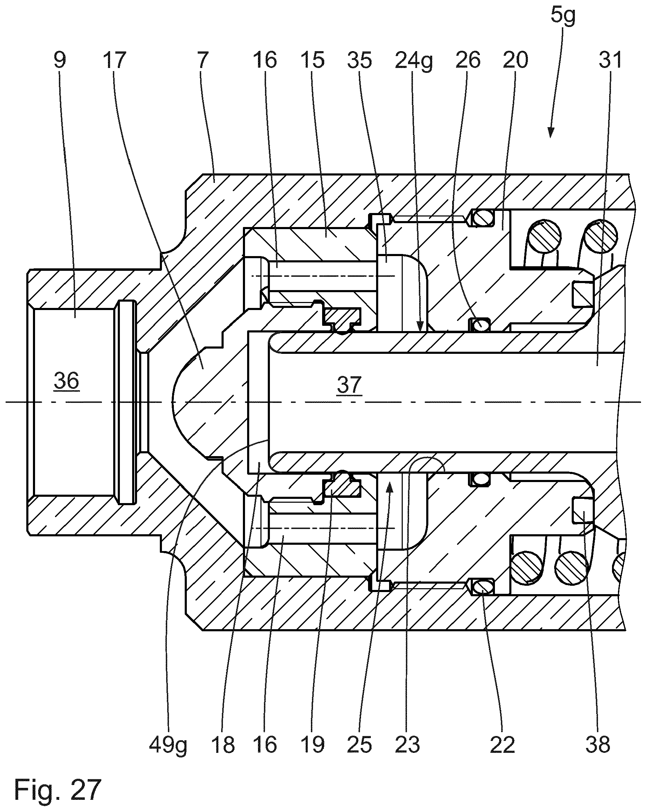

Im Folgenden wird unter Bezugnahme auf die Fig. 27 ein nicht erfindungsgemäßes Ausführungsbeispiel beschrieben. Konstruktiv identische Teile erhalten dieselben Bezugszeichen wie bei den ersten sieben Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten g.

Das Druckreduzier-Ventil 5g gemäß dem achten Ausführungsbeispiel entspricht im Wesentlichen dem Druckreduzier-Ventil 5 gemäß dem ersten Ausführungsbeispiel. Wesentlicher Unterschied ist die Ausgestaltung des Druckregel-Kolbens 24g. Eine in Fig. 27 links dargestellte, der Eingangsöffnung 9 zugewandte Stirnfläche 49g weist einen Radius auf. Der Radius ist insbesondere derart ausgeführt, dass die Stirnfläche 49g an dem der Eingangsöffnung 9 zugewandten Ende einen senkrecht zur Längsachse 8 orientierten Kreis-Querschnitt aufweist.

Alternativ ist es auch denkbar, dass die Stirnfläche 49g anstelle des Radius spitz zulaufende Seitenflächen aufweist, so dass die der Eingangsöffnung 9 zugewandte Querschnittsfläche einer Kreislinie entspricht und somit keinen Flächeninhalt aufweist.

## Patentansprüche

1. Druckreduzier-Ventil für eine automatische Brandlöschanlage umfassend
a. ein eine Längsachse (8) aufweisendes Ventilgehäuse (7)
i. mit einer Eingangsöffnung (9) zum Verbinden des Druckreduzier-Ventils (5c; 5f) mit einem Druckbehälter (2), in dem ein Löschmedium unter Hochdruck (p_{H}) bevorratet ist,
ii. mit einer Ausgangsöffnung (10) zum Verbinden des Druckreduzier-Ventils (5c; 5f;) mit einer Löschmedium-Abgabevorrichtung (6), und
iii. mit einem zwischen der Eingangsöffnung (9) und der Ausgangsöffnung (10) angeordneten Strömungskanal (14),
b. einen in dem Ventilgehäuse (7) entlang der Längsachse (8) zwischen einer Offenstellung und einer Schließstellung verlagerbaren Druckregel-Kolben (24c; 24f),
c. ein entlang des Strömungskanals (14) angeordnetes erstes Dichtungselement (19c; 19f, 51) zum abdichtenden Anliegen an dem Druckregel-Kolben (24c; 24f) in der Schließstellung,
d. ein Kraftspeicher-Element (33) zum Ausüben einer Öffnungskraft (F₁) auf den Druckregel-Kolben (24c; 24f) für dessen Verlagerung in die Offenstellung,
e. wobei in der Schließstellung des Druckregel-Kolbens (24c; 24f) das erste Dichtungselement (19c; 19f, 51) eine der Eingangsöffnung (9) zugewandte Hochdruck-Kammer (36) von einer der Ausgangsöffnung (10) zugewandten Niederdruck-Kammer (37) des Strömungskanals (14) fluiddicht trennt,
f. wobei das Löschmedium in der Hochdruck-Kammer (36) mit Hochdruck (p_{H}) und in der Niederdruck-Kammer (37) mit Niederdruck (p_{N}) bevorratet ist, und
g. wobei das Löschmedium eine der Öffnungskraft (F₁) entgegen wirkende Schließkraft (F₂) auf den Druckregel-Kolben (24c; 24f) verursacht für dessen Verlagerung in die Schließstellung,
h. der Druckregel-Kolben (24c; 24f) in der Offenstellung beabstandet von dem ersten Dichtungselement (19c; 19f) angeordnet ist,
**dadurch gekennzeichnet, dass**
i. ein Führungs-/Dichtungsabschnitt (25c; 25f) des Druckregel-Kolbens (24c; 24f) einen einem Basisabschnitt (28c; 28f) gegenüberliegend angeordneten, aufgeweiteten napfförmigen Abschnitt (44) aufweist,
j. benachbart zu der Eingangsöffnung (9) ein Fluidströmungs-Leitelement (15c; 15f) zur Beeinflussung der Fluidströmung entlang des Strömungskanals (14) vorgesehen ist, wobei das Fluidströmungs-Leitelement (15c; 15f) einen zentralen, konzentrisch zur Längsachse (8) ausgeführten Befestigungsabschnitt (46) aufweist, der zentral in einer Eintauch-Ausnehmung (18c; 18f) angeordnet ist, wobei die Eintauch-Ausnehmung (18c; 18f) eine ringförmige Nut ist, in die der Druckregel-Kolben (24c; 24f) mit dem napfförmigen Abschnitt (44) zum abdichtenden Anliegen an dem ersten Dichtungselement (19c; 19f) eintauchen kann,
k. das erste Dichtungselement (19c; 19f) an einer inneren Zylindermantelfläche des in der Schließstellung angeordneten Druckregel-Kolbens (24c; 24f) anliegt.

2. Druckreduzier-Ventil gemäß Anspruch 1, **dadurch gekennzeichnet, dass** die Eingangsöffnung (9) und die Ausgangsöffnung (10) konzentrisch zur Längsachse (8) angeordnet sind.

3. Druckreduzier-Ventil gemäß einem der vorstehenden Ansprüche, **dadurch gekennzeichnet, dass** das Druckreduzier-Ventil (5c; 5f) rotationssymmetrisch bezüglich der Längsachse (8) ausgeführt ist.

4. Druckreduzier-Ventil gemäß einem der vorstehenden Ansprüche, **dadurch gekennzeichnet, dass** der zum Verlagern des Druckregel-Kolbens (24c; 24f) in die Schließstellung erforderliche Niederdruck (p_{N}) einstellbar ist.

5. Druckreduzier-Ventil gemäß einem der vorstehenden Ansprüche, **gekennzeichnet durch** ein zweites Dichtungselement (29) für eine abgedichtete Verlagerung des Druckregel-Kolbens (24c; 24f) in dem Ventilgehäuse (7).

6. Druckreduzier-Ventil gemäß Anspruch 5, **dadurch gekennzeichnet, dass** das erste Dichtungselement (19c; 19f, 51) eine erste Dichtungsfläche (A₁) festlegt, das zweite Dichtungselement (29) eine zweite Dichtungsfläche (A₂) festlegt und eine effektive Kolbenfläche (A_{eff}) die Differenz der zweiten Dichtungsfläche (A₂) und der ersten Dichtungsfläche (A₁) ist, wobei die effektive Kolbenfläche (A_{eff}) von dem Löschmedium zur Ausüben der Schließkraft (F₂) beaufschlagt wird.

7. Druckreduzier-Ventil gemäß einem der vorstehenden Ansprüche, **dadurch gekennzeichnet, dass** der Druckregel-Kolben (24c; 24f) eine entlang der Längsachse (8) orientierte Durchgangsbohrung (31) aufweist und insbesondere der Strömungskanal (14) die Durchgangsbohrung (31) zumindest abschnittsweise umfasst.

8. Druckreduzier-Ventil gemäß einem der vorstehenden Ansprüche, **gekennzeichnet durch** ein Feder-Element (33), insbesondere eine Schraubenfeder, als Kraftspeicher-Element.

9. Druckreduzier-Ventil gemäß Anspruch 8, **dadurch gekennzeichnet, dass** das Feder-Element (33) in einer Feder-Kammer (34) angeordnet ist, die gegenüber der Niederdruck-Kammer (37) abgedichtet ist, wobei insbesondere eine Entlüftungsbohrung (39) der Feder-Kammer (34) vorgesehen ist.

10. Druckreduzier-Ventil gemäß einem der vorstehenden Ansprüche, **dadurch gekennzeichnet, dass** benachbart zu der Eingangsöffnung (9) ein Fluidströmungs-Leitelement (15) vorgesehen ist, wobei das Fluidströmungs-Leitelement (15) mehrere exzentrisch und parallel zur Längsachse (8) angeordnete Strömungsbohrungen (16) sowie eine zentral angeordnete Abdeckkappe (17) für eine Strömungsumlenkung des Löschmediums durch die Strömungsbohrungen (16) aufweist.

11. Druckreduzier-Ventil gemäß einem der vorstehenden Ansprüche, **gekennzeichnet durch** ein eine dritte Dichtungsfläche (A₃) aufweisendes drittes Dichtungselement (26) zur abgedichteten Führung des Druckregel-Kolbens (24c; 24f) in dem Ventilgehäuse (7), wobei die erste Dichtungsfläche (A₁) und die dritte Dichtungsfläche (A₃) gleich groß sind.

12. Druckreduzier-Ventil gemäß einem der vorstehenden Ansprüche, **gekennzeichnet durch** einen die Ausgangsöffnung (10) aufweisenden an dem Ventilgehäuse (7) lösbar montierbaren Ventilgehäuse-Deckel (11).

13. Druckreduzier-Ventil gemäß einem der vorstehenden Ansprüche, **gekennzeichnet durch** eine von dem Ventilgehäuse (7) und dem Druckregel-Kolben (24b) begrenzte Steuerdruck-Kammer (41), die mit einem Steuerdruck-Medium unter Steuerdruck (ps) derart beaufschlagbar ist, dass eine Steuerdruck-Schließkraft (F₃) auf den Druckregel-Kolben (24b) wirkt.

14. Druckreduzier-Ventil gemäß Anspruch 13, **gekennzeichnet durch** ein Steuerdruck-Ventil (42) zur Beaufschlagung der Steuerdruck-Kammer (41) mit dem Steuerdruck-Medium.

15. Druckreduzier-Ventil gemäß einem der vorstehenden Ansprüche, **gekennzeichnet durch** ein ringförmiges Anschlagdämpfungs-Element (38), das an einer der Ausgangsöffnung (10) zugewandten Stirnseite des Führungs-Elements (20) angeordnet ist.

## Claims

1. Pressure reducing valve for an automatic fire extinguishing system comprising
a. valve housing (7) having a longitudinal axis (8)
i. with an inlet opening (9) for connecting the pressure reducing valve (5c;5f) to a pressure container (2) in which an extinguishing medium is supplied under high pressure (p_{H})
ii. with an outlet opening (10) for connecting the pressure reducing valve (5c; 5f) to an extinguishing medium output device (6) and
iii.with a flow channel (14) arranged between the inlet opening (9) and the outlet opening (10),
b. a pressure regulating piston (24c; 24f) which is displaceable in the valve housing (7) along the longitudinal axis (8) between an open position and a closed position,
c. a first sealing element (19c; 19f, 51) arranged along the flow channel (14) for sealingly bearing against the pressure regulating piston (24c; 24f) in the closed position,
d. a force accumulator element (33) for exerting an opening force (F₁) on the pressure regulating position (24c; 24f) for the displacement thereof into the open position,
e. wherein in the closed position of the pressure regulating piston (24c; 24f) the first sealing element (19c; 19f, 51) separates a high-pressure chamber (36) facing the inlet opening (9) in fluid-tight manner from a low-pressure chamber (37) of the flow channel (14) facing the outlet opening (10),
f. wherein the extinguishing medium is supplied in the high-pressure chamber (36) with high pressure (p_{H}) and in the low-pressure chamber (37) with low pressure (p_{N}), and
g. wherein the extinguishing medium creates a closing force (F₂) acting opposite the opening force (F₁) on the pressure regulating piston (24c; 24f) in order to move the latter into the closed position,
h. the pressure regulating piston (24c; 24f) is arranged in the open position spaced from the first sealing element (19c; 19f), **characterised in that**
i. a guiding/sealing portion (25c; 25f) of the pressure regulating piston (24c; 24f) has a widened bowl-shaped portion (44) arranged opposite a base portion (28c; 28f),
j. a fluid flow guide element (15c; 15f) is provided adjacent the inlet opening (9) to control the fluid flow along the flow channel (14), wherein the fluid flow guide element (15c; 15f) has a central fastening portion (46) designed concentric with the longitudinal axis (8) and arranged centrally in an immersion recess (18c; 18f), wherein the immersion recess (18c; 18f) is an annular groove into which the pressure regulating piston (24c; 24f) can project with the bowl-shaped portion (44) to sealingly bear against the first sealing element (19c; 19f),
k. the first sealing element (19c; 19f) bears against an inner cylindrical sleeve face of the pressure regulating piston (24c; 24f) arranged in the closed position.

2. The pressure reducing valve according to Claim 1, **characterised in that** the inlet opening (9) and the outlet opening (10) are arranged concentric with the longitudinal axis (8).

3. The pressure reducing valve according to one of the preceding claims, **characterised in that** the pressure reducing valve (5c; 5f) is designed rotationally symmetrical with regard to the longitudinal axis (8).

4. The pressure reducing valve according to one of the preceding claims **characterised in that** the low pressure (p_{N}) required to move the pressure regulating piston (24c; 24f) into the closed position is adjustable.

5. The pressure reducing valve according to one of the preceding claims **characterised by** a second sealing element (29) for a sealed displacement of the pressure regulating piston (24c; 24f) in the valve housing (7).

6. The pressure reducing valve according to Claim 5 **characterised in that** the first sealing element (19c; 19f, 51) defines a first sealing surface (A₁), the second sealing element (29) defines a second sealing surface (A₂), and an effective piston surface (A_{eff}) is the difference between the second sealing surface (A₂) and the first sealing surface (A₁), wherein the effective piston surface (A_{eff}) is charged by the extinguishing medium in order to exert the closing force (F₂).

7. The pressure reducing valve according to one of the preceding claims **characterised in that** the pressure regulating piston (24c; 24f) has a through bore (31) oriented along the longitudinal axis (8) and in particular the flow channel (14) surrounds the through bore (31) at least in some sections.

8. The pressure reducing valve according to one of the preceding claims **characterised by** a spring element (33), in particular a coil spring, as the force accumulator element.

9. The pressure reducing valve according to claim 8 **characterised in that** the spring element (33) is arranged in a spring chamber (34) which is sealed from the low-pressure chamber (37) wherein in particular a ventilation bore (39) of the spring chamber (34) is provided.

10. The pressure reducing valve according to one of the preceding claims, **characterised in that** a fluid flow guide element (15) is provided adjacent the inlet opening (9) wherein the fluid flow guide element (15) has several flow bores (16) arranged eccentrically and parallel to the longitudinal axis (8), as well as a centrally arranged covering cap (17) for deflecting the flow of the extinguishing medium through the flow bores (16).

11. The pressure reducing valve according to one of the preceding claims **characterised by** a third sealing element (26) having a third sealing surface (A₃) for guiding the pressure reducing piston (24c; 24f) in sealed manner in the valve housing (7), wherein the first sealing surface (A₁) and the third sealing surface (A₃) are identical in size.

12. The pressure reducing valve according to one of the preceding claims **characterised by** a valve housing lid (11) which contains the outlet opening (10) and which can be detachably mounted on the valve housing (7).

13. The pressure reducing valve according to one of the preceding claims **characterised by** a control pressure chamber (41) which is defined by the valve housing (7) and the pressure regulating piston (24b) and which can be charged with a control pressure medium under a control pressure (pₛ) in such a way that a control pressure closing force (F₃) acts on the pressure regulating piston (24b).

14. The pressure reducing valve according to Claim 13 **characterised by** a control pressure valve (42) for charging the control pressure chamber (41) with the control pressure medium.

15. The pressure reducing valve according to one of the preceding claims **characterised by** an annular stop damping element (38) which is arranged on an end side of the guiding element (20) facing the outlet opening (10).

## Revendications

1. Soupape réductrice de pression pour une installation d'extinction d'incendie automatique comprenant
a. un carter (7) de soupape présentant un axe longitudinal (8)
i. comportant une ouverture d'entrée (9) destinée à relier la soupape réductrice de pression (5c ; 5f) à un récipient sous pression (2), dans lequel un agent d'extinction est stocké sous haute pression (p_{H}),
ii. une ouverture de sortie (10) destinée à relier la soupape réductrice de pression (5c ; 5f ;) à un dispositif distributeur d'agent d'extinction (6), et
iii. et un canal d'écoulement (14) disposé entre l'ouverture d'entrée (9) et l'ouverture de sortie (10),
b. un piston de commande de pression (24c ; 24f) déplaçable dans le carter de soupape (7) le long de l'axe longitudinal (8) entre une position ouverte et une position fermée,
c. un premier élément d'étanchéité (19c; 19f, 51) disposé le long du canal d'écoulement (14) et destiné à reposer de manière étanche contre le piston de commande de pression (24c ; 24f) dans la position fermée,
d. un élément accumulateur de force (33) destiné à exercer une force d'ouverture (F₁) sur le piston de commande de pression (24c ; 24f) pour son déplacement dans la position ouverte,
e. Dans la position ouverte du piston de commande de pression (24c ; 24f), le premier élément d'étanchéité (19c; 19f, 51) séparant de manière étanche au fluide une chambre de haute pression (36) orientée vers l'ouverture d'entrée (9) d'une chambre de basse pression (37) orientée vers l'ouverture de sortie (10) du canal d'écoulement (14),
f. l'agent d'extinction étant stocké dans la chambre de haute pression (36) sous haute pression (p_{H}) et dans la chambre de basse pression (37) sous basse pression (p_{N}), et
g. l'agent d'extinction suscite sur le piston de commande de pression (24c ; 24f) une force de fermeture (F₂) agissant contre la force d'ouverture (F₁) pour son déplacement dans la position fermée,
h. le piston de commande de pression (24c ; 24f) étant disposé de manière à une distance du premier élément d'étanchéité (19c ; 19f),
**caractérisée en ce que**
i. une section de guidage/d'étanchéité (25c ; 25f) du piston de commande de pression (24c ; 24f) comporte une section en forme de godet élargie (44) disposée en face d'une section de base (28c ; 28f),
j. un élément de guidage d'écoulement de fluide (15c ; 15f) destiné à influencer l'écoulement de fluide le long du canal d'écoulement (14) est prévu à proximité de l'ouverture d'entrée (9), l'élément de guidage d'écoulement de fluide (15c ; 15f) comportant une section de fixation (46) centrale qui est disposée concentriquement par rapport à l'axe longitudinal (8) et qui se trouve au centre dans un évidement d'immersion (18c ; 18f), l'évidement d'immersion (18c ; 18f) étant une rainure annulaire dans laquelle le piston de commande de pression (24c ; 24f) peut être immergé avec la section en forme de godet (44) pour assurer l'étanchéité contre le premier élément d'étanchéité (19c ; 19f),
k. le premier élément d'étanchéité (19c ; 19f) repose contre une surface d'enveloppe de cylindre intérieure du piston de commande de pression (24c ; 24f) disposé en position fermée.

2. Soupape réductrice de pression selon la revendication 1, **caractérisée en ce que** l'ouverture d'entrée (9) et l'ouverture de sortie (10) sont disposées concentriquement à l'axe longitudinal (8).

3. Soupape réductrice de pression selon l'une des revendications précédentes, **caractérisée en ce que** la soupape réductrice de pression (5c ; 5f) est conçue de manière symétrique en rotation par rapport à l'axe longitudinal (8).

4. Soupape réductrice de pression selon l'une des revendications précédentes, **caractérisée en ce que** la basse pression (p_{N}) nécessaire pour déplacer le piston de commande de pression (24c ; 24f) en position fermée est réglable.

5. Soupape de réduction de pression selon l'une des revendications précédentes, **caractérisée par** un deuxième élément d'étanchéité (29) pour un déplacement étanche du piston de commande de pression (24c ; 24f) dans le carter de soupape (7).

6. Soupape réductrice de pression selon la revendication 5, **caractérisée en ce que** le premier élément d'étanchéité (19c ; 19f, 51) définit une première surface d'étanchéité (A₁), le deuxième élément d'étanchéité (29) définit une deuxième surface d'étanchéité (A₂) et une surface effective du piston (A_{eff}) est la différence entre la deuxième surface d'étanchéité (A₂) et la première surface d'étanchéité (A₁), la surface effective du piston (A_{eff}) étant sollicitée par l'agent d'extinction pour exercer la force de fermeture (F₂).

7. Soupape réductrice de pression selon l'une des revendications précédentes, **caractérisée en ce que** le piston de commande de pression (24c ; 24f) comporte un alésage traversant (31) orienté le long de l'axe longitudinal (8) et en particulier **en ce que** le canal d'écoulement (14) comprend l'alésage traversant (31) au moins par sections.

8. Soupape réductrice de pression selon l'une des revendications précédentes, **caractérisée par** un élément à ressort (33), en particulier un ressort hélicoïdal, comme élément de stockage de la force.

9. Soupape réductrice de pression selon la revendication 8, **caractérisée en ce que** l'élément à ressort (33) est disposé dans une chambre à ressort (34) qui est étanche par rapport à la chambre de basse pression (37), en particulier un alésage d'aération (39) de la chambre à ressort (34) étant prévu.

10. Soupape réductrice de pression selon l'une des revendications précédentes, **caractérisée en ce qu'**un élément de guidage d'écoulement de fluide (15) est prévu à proximité de l'ouverture d'entrée (9), l'élément de guidage d'écoulement de fluide (15) comportant plusieurs alésages d'écoulement (16) disposés de manière excentrique et parallèle à l'axe longitudinal (8) ainsi qu'un couvercle (17) disposé au centre pour une déviation de l'agent d'extinction par les alésages d'écoulement (16).

11. Soupape réductrice de pression selon l'une des revendications précédentes, **caractérisée par** un troisième élément d'étanchéité (26) comportant une troisième surface d'étanchéité (A₃) destinée à guider de manière étanche le piston de commande de pression (24c ; 24f) dans le carter de soupape (7), la première surface d'étanchéité (A₁) et la troisième surface d'étanchéité (A₃) étant de taille identique.

12. Soupape réductrice de pression selon l'une des revendications précédentes, **caractérisée par** un couvercle de carter de soupape (11) qui comporte l'ouverture de sortie (10) et qui peut être monté de manière amovible sur le carter de soupape (7).

13. Soupape réductrice de pression selon l'une des revendications précédentes, **caractérisée par** une chambre de pression de commande (41) qui est délimitée par le carter de soupape (7) et le piston de commande de pression (24b) et qui peut être actionnée par un fluide sous pression de commande (ps) de sorte qu'une force de fermeture (F₃) de la pression de commande agisse sur le piston de commande de pression (24b).

14. Soupape réductrice de pression selon la revendication 13, **caractérisée par** une soupape de pression de commande (42) destinée à appliquer le fluide de pression de commande dans la chambre de pression de commande (41).

15. Soupape réductrice de pression selon l'une des revendications précédentes, **caractérisée par** un élément d'amortissement de butée annulaire (38) qui est disposé sur une face frontale de l'élément de guidage (20) orientée vers l'ouverture de sortie (10).
